# EUROPEAN PATENT APPLICATION

(11) **EP 4 517 542 A1**
(43) Date of publication of application: **05.03.2025**
(21) Application number: 22966277.0
(22) Date of filing: 25.11.2022
(51) Int. Cl.: G06F 15/16, H01M 4/133, H01M 4/139

(54) **SECONDARY BATTERY AND ELECTRICAL APPARATUS**

(71) Applicant: Contemporary Amperex Technology (Hong Kong) Limited, Central, Central And Western District (HK)
(72) Inventor: LI, Lianchuan, Ningde, Fujian 352100 (CN); LI, Yuanyuan, Ningde, Fujian 352100 (CN); SHEN, Rui, Ningde, Fujian 352100 (CN); HE, Libing, Ningde, Fujian 352100 (CN)
(74) Representative: Gong, Jinping
(86) International application number: PCT/CN2022/134476
(87) International publication number: WO 2024/108589

(57) **Abstract**

The present application provides a secondary battery and a power consuming device. The secondary battery comprises a negative electrode plate, wherein the negative electrode plate comprises a negative electrode current collector and a negative electrode film layer formed on at least one surface of the negative electrode current collector, the negative electrode film layer has a first surface away from the negative electrode current collector and a second surface opposite to the first surface, and the thickness of the negative electrode film layer is denoted as H; an area within a thickness range from the second surface of the negative electrode film layer to 0.3 H is denoted as a first area of the negative electrode film layer, and an area within a thickness range from the first surface of the negative electrode film layer to 0.3 H is denoted as a second area of the negative electrode film layer; the first area comprises a first active material, the first active material comprises a first carbon-based material, and the first carbon-based material has a pore structure; and the second area comprises a second active material, and the second active material comprises a second carbon-based material. The present application enables the secondary battery to have not only a high energy density but also high safety performance, and good dynamic performance, cycling performance and storage performance.

## Description

### Technical Field

The present application belongs to the technical field of batteries, and in particular relates to a secondary battery and a power consuming device.

### Background Art

In recent years, secondary batteries have been widely used in energy storage power systems such as hydroelectric, thermal, wind and solar power plants, as well as electric tools, electric bicycles, electric motorcycles, electric vehicles, military equipment, aerospace and other fields. With the increasingly wide application range of secondary batteries, serious challenges have been posed on the performance of the secondary batteries. For example, the secondary batteries are required to have various performances such as energy density and dynamic performance simultaneously. However, a problem faced in the prior art is that when improving the dynamic performance of secondary batteries, it is often difficult to have the energy density of secondary batteries simultaneously.

### Summary of the Invention

The present application has been developed in view of the above technical problems, and an objective thereof is to provide a secondary battery and a power consuming device, which enables the secondary battery to have not only a high energy density but also high safety performance, and good dynamic performance, cycling performance and storage performance.

A first aspect of the present application provides a secondary battery, comprising a negative electrode plate, wherein the negative electrode plate comprises a negative electrode current collector and a negative electrode film layer formed on at least one surface of the negative electrode current collector, the negative electrode film layer has a first surface away from the negative electrode current collector and a second surface opposite to the first surface, and the thickness of the negative electrode film layer is denoted as H. An area within a thickness range from the second surface of the negative electrode film layer to 0.3 H is denoted as a first area of the negative electrode film layer, and an area within a thickness range from the first surface of the negative electrode film layer to 0.3 H is denoted as a second area of the negative electrode film layer. The first area comprises a first active material, the first active material comprises a first carbon-based material, and the first carbon-based material has a pore structure; and the second area comprises a second active material, and the second active material comprises a second carbon-based material.

The first carbon-based material has a pore structure and is easily deformed during cold pressing. When the first carbon-based material is present in the first area of the negative electrode film layer, it can effectively reduce the rolling pressure of the negative electrode plate, and can further effectively reduce particle damage as well as the occurrence of side reactions. The pore structure of the first carbon-based material can also reserve the required expansion space for the volume change of particles, thereby reducing the risk of particle breakage to generate new interfaces, and further reducing the occurrence of side reactions. The pore structure of the first carbon-based material can also play a role in buffering the volume expansion of the negative electrode film layer. In addition, when the first carbon-based material is present in the first area of the negative electrode film layer, its adverse impact on the dynamic performance of the secondary battery can be reduced, and its advantages of high capacity and high compacted density can be fully utilized, thereby improving the energy density of the secondary battery. Therefore, the negative electrode plate provided by the present application can simultaneously have a high compacted density, low volume change and good active ion transport performance, which further enables the secondary battery to have not only a high energy density but also high safety performance, and good dynamic performance, cycling performance and storage performance.

In any embodiment of the present application, the tap density of the second carbon-based material is greater than that of the first carbon-based material. By adjusting the graphitization degree of the second carbon-based material to be less than that of the first carbon-based material, it is beneficial for the secondary battery to have a high energy density and good dynamic performance simultaneously.

In any embodiment of the present application, the graphitization degree of the second carbon-based material is less than that of the first carbon-based material. By adjusting the graphitization degree of the second carbon-based material to be less than that of the first carbon-based material, it is beneficial for the secondary battery to have a high energy density and good dynamic performance simultaneously.

In any embodiment of the present application, the powder OI value of the second carbon-based material is less than that of the first carbon-based material. By adjusting the powder OI value of the second carbon-based material to be less than that of the first carbon-based material, it is beneficial to further improving the dynamic performance and safety performance of the secondary battery.

In any embodiment of the present application, the gram capacity of the second carbon-based material is less than that of the first carbon-based material. The second carbon-based material has a lower gram capacity and a larger interlayer spacing, which is beneficial to the rapid deintercalation of active ions. When the first carbon-based material with a high capacity is present in the first area of the negative electrode film layer, and the second carbon-based material with good active ion transport performance is present in the second area of the negative electrode film layer, it is beneficial for the secondary battery to have a high energy density and good dynamic performance simultaneously.

In any embodiment of the present application, the volume distribution particle size Dv50 of the second carbon-based material is less than that of the first carbon-based material. By adjusting the volume distribution particle size Dv50 of the second carbon-based material to be less than that of the first carbon-based material, it is beneficial for the secondary battery to have a high energy density, and good cycling performance, storage performance and dynamic performance simultaneously.

In any embodiment of the present application, the specific surface area of the second carbon-based material is larger than that of the first carbon-based material. By adjusting the specific surface area of the second carbon-based material to be larger than that of the first carbon-based material, it is beneficial for the secondary battery to have a high energy density, and good cycling performance, storage performance and dynamic performance simultaneously.

In any embodiment of the present application, the powder compacted density of the second carbon-based material under a pressure of 50,000 N is less than that of the first carbon-based material under a pressure of 50,000 N. With the second carbon-based material with a smaller powder compacted density being present in the second area of the negative electrode film layer and the first carbon-based material with a larger powder compacted density being present in the first area of the negative electrode film layer, it is beneficial for the negative electrode film layer to have good active ion and electron transport performances simultaneously, and it is further beneficial for the secondary battery to have a high energy density, and good cycling performance and dynamic performance simultaneously.

In any embodiment of the present application, the X-ray diffraction pattern of the first carbon-based material does not have a diffraction peak of the crystal face 012 of a phase 3R. The first carbon-based material does not have a diffraction peak of the crystal face 012 of a phase 3R, so the first carbon-based material particles have fewer internal defects, which can further reduce the occurrence of side reactions and the irreversible consumption of active ions, thereby improving the first coulombic efficiency, cycling performance and storage performance of the secondary battery.

In any embodiment of the present application, the X-ray diffraction pattern of the first carbon-based material has a diffraction peak of the crystal face 101 of a phase 3R. As the first carbon-based material has a diffraction peak of the crystal face 101 of a phase 3R, there may be more active sites on the surface of the first carbon-based material, which is beneficial to the rapid deintercalation of active ions.

In any embodiment of the present application, the first carbon-based material satisfies 0 < I_{3R(101)}/I_{2H(004)} ≤ 0.100, wherein I_{3R(101)} is the peak intensity of a diffraction peak of the crystal face 101 of a phase 3R in a X-ray diffraction pattern of the first carbon-based material, and I_{2H(004)} is the peak intensity of a diffraction peak of the crystal face 004 of a phase 2H in a X-ray diffraction pattern of the first carbon-based material. When the I_{3R(101)}/I_{2H(004)} of the first carbon-based material is within the ranges above, there may be more active sites on the surface of the first carbon-based material, which is beneficial to is beneficial to the rapid deintercalation of active ions; in addition, the surface stability of the first carbon-based material is relatively high, which can effectively reduce side reactions on the surface as well as the consumption of active ions.

In any embodiment of the present application, the first carbon-based material comprises one or more pore structures having a pore area greater than or equal to 0.15 µm², optionally one or more pore structures having a pore area of 0.15 µm² - 2.0 µm². When the first carbon-based material comprises the pore structures having a pore area mentioned above, the pore structures can reserve a required expansion space for the volume change of the particles thereof, such that the risk of particle breakage to generate new interfaces can be further reduced, which can further reduce the occurrence of side reactions and improve the cycling performance and storage performance of the secondary battery; in addition, the pore structures can also buffer the volume change of the negative electrode film layer, reduce the thickness expansion rate of the negative electrode film layer and improve the safety performance of the secondary battery.

In any embodiment of the present application, the first carbon-based material comprises an outer area and an inner area inside the outer area, wherein the outer area is an area extending from the surface of a particle of the first carbon-based material to the inside of the particle by a distance of 0.25 L, wherein L is the short axis length of the particle of the first carbon-based material. The outer area has a total pore area denoted as S₁, the inner area has a total pore area denoted as S₂, and S₂ > S₁. When the first carbon-based material further satisfies S₂ > S₁, the first coulombic efficiency of the secondary battery can be improved, and the cycling performance and storage performance of the secondary battery can be further improved.

In any embodiment of the present application, 1.5 ≤ S₂/S₁ ≤ 500, optionally, 2 ≤ S₂/S₁ ≤ 450. When S₂/S₁ of the first carbon-based material further satisfies the ranges above, the secondary battery can better have a high energy density, and good cycling performance and storage performance simultaneously.

In any embodiment of the present application, the area of the pore structures in the outer area of the first carbon-based material is less than or equal to 0.2 µm², optionally less than or equal to 0.1 µm². By controlling the area of the pore structures in the outer area of the first carbon-based material to be within the ranges above, the outer area of the first carbon-based material can have a compact structure, such that the structural stability of the first carbon-based material can be effectively improved, an electrolyte solution can be prevented from infiltrating into the pore structures inside the first carbon-based material particles as much as possible, and the occurrence of side reactions is reduced, thereby effectively improving the cycling performance and storage performance of the secondary battery.

In any embodiment of the present application, the inner area of the first carbon-based material comprises one or more pore structures having an area greater than or equal to 0.15 µm², optionally one or more pore structures having an area of 0.15 µm² - 2.0 µm². When the inner area of the first carbon-based material comprises pore structures of the above size, on the one hand, the rolling pressure of the negative electrode plate can be effectively reduced, the particle damage can be effectively reduced, and a sufficient and stable expansion space can be reserved for the volume change of the first carbon-based material particles, reducing the risk of breakage of the first carbon-based material particles; and on the other hand, the compacted density of the negative electrode film layer can be also improved, improving the energy density of the secondary battery.

In any embodiment of the present application, at least part of the surface of the first carbon-based material has a carbon coating layer.

In any embodiment of the present application, the first carbon-based material comprises primary particles, and optionally, the number percentage of the primary particles in the first carbon-based material is ≥ 70%. When the first carbon-based material contains an appropriate proportion of primary particles, it can have a higher structural stability, and the occurrence of side reactions is reduced, thereby improving the cycling performance and storage performance of the secondary battery; in addition, the compacted density of the negative electrode film layer can also be improved, thereby improving the energy density of the secondary battery.

In any embodiment of the present application, the mass percentage of the first carbon-based material in the first active material is ≥ 50 wt%, optionally 60 wt% - 100 wt%.

In any embodiment of the present application, the specific surface area of the first carbon-based material is 0.6 m²/g - 2.4 m²/g, optionally 0.8 m²/g - 1.6 m²/g. The first carbon-based material has a smaller specific surface area, such that the consumption of active ions by SEI film formation can be reduced, thereby improving the initial coulombic efficiency, cycling performance and storage performance of the secondary battery.

In any embodiment of the present application, the volume distribution particle size Dv50 of the first carbon-based material is 8.0 µm - 30.0 µm, optionally 10.0 µm - 20.0 µm.

In any embodiment of the present application, the volume distribution particle size Dv90 of the first carbon-based material is 16.0 µm - 45.0 µm, optionally 17.0 µm - 42.0 µm.

When the volume distribution particle size Dv50 and/or Dv90 of the first carbon-based material is within the ranges above, it is beneficial to improving the active ion and electron transport performances, thereby further improving the dynamic performance of the secondary battery; in addition, the specific surface area of the first carbon-based material can also be reduced, and the occurrence of side reactions can be reduced, thereby improving the cycling performance and storage performance of the secondary battery.

In any embodiment of the present application, the (Dv90 - Dv10)/Dv50 of the first carbon-based material is ≤ 1.55, optionally 0.90-1.50. When (Dv90-Dv10)/Dv50 of the first carbon-based material is within the above range, its particle stacking performance is good, which is beneficial to improving the compacted density of the negative electrode film layer, thereby further improving the energy density of the secondary battery; in addition, it is also beneficial for the negative electrode film layer to have a reasonable pore structure, which improves the dynamic performance of the secondary battery.

In any embodiment of the present application, the powder compacted density of the first carbon-based material under a pressure of 50,000 N is 1.80 g/cm³ - 2.10 g/cm³, optionally 1.85 g/cm³ - 2.05 g/cm³. When the powder compacted density of the first carbon-based material is within the above range, the compacted density of the negative electrode film layer can be improved, such that the energy density of the secondary battery can be improved; and it is also beneficial for the negative electrode film layer to have a reasonable pore structure, which improves the active ion and electron transport performances, thereby improving the dynamic performance of the secondary battery.

In any embodiment of the present application, the tap density of the first carbon-based material is 0.80 g/cm³ - 1.20 g/cm³, optionally 0.90 g/cm³ - 1.18 g/cm³. When the tap density of the first carbon-based material is within the ranges above, the compacted density of the negative electrode film layer can be improved, such that the energy density of the secondary battery can be improved; and it is also beneficial for the negative electrode film layer to have a reasonable pore structure, which improves the active ion and electron transport performances, thereby improving the dynamic performance of the secondary battery.

In any embodiment of the present application, the graphitization degree of the first carbon-based material is 94% - 98%, optionally 95% - 97%. Therefore, it is beneficial to improving the energy density of the secondary battery.

In any embodiment of the present application, the powder OI value of the first carbon-based material is 10-35, optionally 13-30. The first carbon-based material has a smaller powder OI value, which is beneficial to reducing the expansion rate when active ions are intercalated and reducing the thickness expansion rate of the negative electrode film layer, thereby further improving the cycling performance, storage performance and safety performance of the secondary battery.

In any embodiment of the present application, the gram capacity of the first carbon-based material is 355 mAh/g - 371 mAh/g, optionally 360 mAh/g - 370 mAh/g. Therefore, it is beneficial to improving the energy density of the secondary battery.

In any embodiment of the present application, the surface of the second carbon-based material does not have a carbon coating layer. The second carbon-based material has a relatively stable surface. When there is no coating layer on the surface thereof, it is beneficial to maintaining its low side-reaction activity and reducing the occurrence of side reactions, thereby further improving the cycling performance and storage performance of the secondary battery.

In any embodiment of the present application, the second carbon-based material comprises secondary particles; and optionally, the number percentage of the secondary particles in the second carbon-based material is ≥ 60%, optionally 60% - 90%. When the second carbon-based material contains an appropriate proportion of secondary particles, the active ion channels in the negative electrode film layer can be increased and the active ion intercalation path can be shorten, which can further improve the dynamic performance of the secondary battery and can reduce the polarization of a battery and the occurrence of side reactions, thereby enabling the secondary battery to have good cycling performance and storage performance simultaneously.

In any embodiment of the present application, the volume distribution particle size Dv50 of the second carbon-based material is 6 µm - 24 µm, optionally 9 µm - 13 µm. When the volume distribution particle size Dv50 of the second carbon-based material is within the ranges above, it is beneficial to improving the active ion and electron transport performances, thereby further improving the dynamic performance of the secondary battery; in addition, the specific surface area of the second carbon-based material can also be reduced, and the occurrence of side reactions can be reduced, thereby improving the cycling performance and storage performance of the secondary battery.

In any embodiment of the present application, the specific surface area of the second carbon-based material is 1.2 m²/g - 3.0 m²/g, optionally 1.2 m²/g - 1.8 m²/g. By adjusting the specific surface area of the second carbon-based material to be within the ranges above, it is beneficial to reducing the occurrence of side reactions and the consumption of active ions by SEI film formation, which is beneficial for the secondary battery to have high first coulombic efficiency, and good cycling performance and storage performance simultaneously.

In any embodiment of the present application, the powder compacted density of the second carbon-based material under a pressure of 50,000 N is 1.6 g/cm³ - 1.95 g/cm³, optionally 1.65 g/cm³ - 1.85 g/cm³. When the powder compacted density of the second carbon-based material is within the ranges above, the compacted density of the negative electrode film layer can be improved, such that the energy density of the secondary battery can be improved; and it is also beneficial for the negative electrode film layer to have a reasonable pore structure, which improves the active ion and electron transport performances, thereby improving the dynamic performance of the secondary battery.

In any embodiment of the present application, the tap density of the second carbon-based material is 0.95 g/cm³ - 1.35 g/cm³, optionally 1.05 g/cm³ - 1.30 g/cm³. When the tap density of the second carbon-based material is within the ranges above, the compacted density of the negative electrode film layer can be improved, such that the energy density of the secondary battery can be improved; and it is also beneficial for the negative electrode film layer to have a reasonable pore structure, which improves the active ion and electron transport performances, thereby improving the dynamic performance of the secondary battery.

In any embodiment of the present application, the graphitization degree of the second carbon-based material is ≥ 91.5%, optionally 91.5%-95.4%. By adjusting the graphitization degree of the second carbon-based material to be within the ranges above, it is beneficial to improving the active ion transport performance of the negative electrode film layer, which is beneficial for the secondary battery to have a high energy density and good dynamic performance simultaneously.

In any embodiment of the present application, the powder OI value of the second carbon-based material is 2-5.5, optionally 2.5-5. The second carbon-based material has a smaller powder OI value, and the particles have active-ion intercalating holes in all directions, such that the active ions from the positive electrode can be quickly received, thereby further improving the dynamic performance of the secondary battery. In any embodiment of the present application, the gram capacity of the second carbon-based material is 340 mAh/g - 360 mAh/g, optionally 348 mAh/g - 356 mAh/g. When the gram capacity of the second carbon-based material is within the ranges above, on the one hand, the energy density of the secondary battery can be improved, and on the other hand, the second carbon-based material can also have good active ion transport performance, which is further beneficial to improving the dynamic performance of the secondary battery.

In any embodiment of the present application, the second carbon-based material comprises graphite; and optionally, the graphite comprises at least one of artificial graphite and natural graphite.

In any embodiment of the present application, the first active material further comprises a third carbon-based material, and the third carbon-based material comprises artificial graphite with a primary particle morphology. The combination of the first carbon-based material and the third carbon-based material is beneficial for the negative electrode film layer to have a suitable pore structure, and is also beneficial to improving the active ion transport performance of the negative electrode film layer.

In any embodiment of the present application, the third carbon-based material comprises artificial graphite with a primary particle morphology, and the surface of the artificial graphite does not have a carbon coating layer. The third carbon-based material has a relatively stable surface. When there is no carbon coating layer on the surface thereof, it is beneficial to maintaining its low side reaction activity and reducing the occurrence of side reactions, thereby further improving the cycling performance and storage performance of the secondary battery.

In any embodiment of the present application, the mass percentage of the third carbon-based material in the first active material is less than or equal to 50 wt%, optionally 20 wt% - 50 wt%.

In any embodiment of the present application, the number percentage of the artificial graphite with a primary particle morphology in the third carbon-based material is ≥ 60%, optionally 70% - 95%. When the third carbon-based material contains an appropriate proportion of primary particles, it can have a higher structural stability, and the occurrence of side reactions is reduced, thereby improving the cycling performance and storage performance of the secondary battery; in addition, the compacted density of the negative electrode film layer can also be improved, thereby improving the energy density of the secondary battery.

In any embodiment of the present application, the graphitization degree of the third carbon-based material is 92.5% - 95.5%, optionally 92.7% - 95.5%. When the graphitization degree of the third carbon-based material is within the ranges above, it is beneficial to improving the active ion transport performance of the negative electrode film layer, which is beneficial for the secondary battery to have a high energy density and good dynamic performance simultaneously.

In any embodiment of the present application, the powder OI value of the third carbon-based material is 4.5-11.5, optionally 4.5-11.0. The third carbon-based material has a smaller powder OI value, and the particles have active-ion intercalating holes in all directions, such that the active ions from the positive electrode can be quickly received, thereby further improving the dynamic performance of the secondary battery.

In any embodiment of the present application, the (Dv90-Dv10)/Dv50 of the third carbon-based material is ≤ 1.65, optionally 0.90 - 1.65. When (Dv90-Dv10)/Dv50 of the third carbon-based material is within the ranges above, it exhibits a good particle stacking performance, which is beneficial to improving the compacted density of the negative electrode film layer, thereby further improving the energy density of the secondary battery; in addition, it is also beneficial for the negative electrode film layer to have a reasonable pore structure, which improves the cycling performance and dynamic performance of the secondary battery.

In any embodiment of the present application, the volume distribution particle size Dv50 of the third carbon-based material is 12.0 µm - 22.0 µm, optionally 13.5 µm - 20.0 µm. When the volume distribution particle size Dv50 of the third carbon-based material is within the ranges above, it is beneficial to improving the active ion and electron transport performances, thereby further improving the dynamic performance of the secondary battery; in addition, the specific surface area of the third carbon-based material can be reduced, and the occurrence of side reactions can be reduced, thereby improving the cycling performance and storage performance of the secondary battery.

In any embodiment of the present application, the specific surface area of the third carbon-based material is 1.0 m²/g - 2.0 m²/g, optionally 1.05 m²/g - 1.95 m²/g. The third carbon-based material has a smaller specific surface area and a lower surface activity, which can reduce the consumption of active ions by SEI film formation, improve the first coulombic efficiency of the secondary battery, and also can improve the cycling performance and storage performance of the secondary battery.

In any embodiment of the present application, the tap density of the third carbon-based material is 0.95 g/cm³ - 1.25 g/cm³, optionally 1.00 g/cm³ - 1.25 g/cm³. When the tap density of the third carbon-based material is within the ranges above, the compacted density of the negative electrode film layer can be improved, such that the energy density of the secondary battery can be improved; and it is also beneficial for the negative electrode film layer to have a reasonable pore structure, which improves the active ion and electron transport performances, thereby improving the dynamic performance of the secondary battery.

In any embodiment of the present application, the gram capacity of the third carbon-based material is 350 mAh/g - 363 mAh/g, optionally 352 mAh/g - 362 mAh/g. When the gram capacity of the third carbon-based material is within the ranges above, on the one hand, the energy density of the secondary battery can be improved, and on the other hand, the active ion transport performance of the negative electrode film layer can be improved, which is further beneficial to improving the dynamic performance of the secondary battery.

A second aspect of the present application provides a power consuming device comprising a secondary battery according to the first aspect of the present application.

The power consuming device of the present application comprises the secondary battery provided by the present application, and thus has at least the same advantages as the secondary battery.

### Brief Description of the Drawings

In order to illustrate the technical solutions of the examples of the present application more clearly, the drawings used in the examples of the present application will be described briefly below. Apparently, the drawings described below are merely some embodiments of the present application, and those of ordinary skill in the art may derive other drawings from these drawings without creative efforts.
Fig. 1 shows a schematic diagram of an embodiment of a negative electrode plate of the present application.
Fig. 2 shows a schematic diagram of another embodiment of a negative electrode plate of the present application.
Fig. 3 shows a schematic diagram of yet another embodiment of a negative electrode plate of the present application.
Fig. 4 shows a schematic view of a cross-sectional image of the particle of a first carbon-based material of the present application.
Fig. 5 shows a schematic diagram of an embodiment of a secondary battery of the present application.
Fig. 6 shows an exploded schematic diagram of an embodiment of the secondary battery of the present application.
Fig. 7 shows a schematic diagram of an embodiment of a battery module of the present application.
Fig. 8 shows a schematic diagram of an embodiment of a battery pack of the present application.
Fig. 9 shows an exploded schematic diagram of the embodiment of a battery pack shown in Fig. 8.
Fig. 10 shows a schematic diagram of an embodiment of a power consuming device comprising a secondary battery of the present application as a power supply.

In the drawings, the figures are not necessarily drawn to scale. List of reference signs: 1 battery pack, 2 upper box body, 3 lower box body, 4 battery module, 5 secondary battery, 51 housing, 52 electrode assembly, 53 cover plate, 10 negative electrode plate, 101 negative electrode current collector, 102 negative electrode film layer, 102a first surface, 102b second surface, 1021 first area, 1022 second area, 1023 middle area, 200 first carbon-based material, 201 outer area, 202 inner area.

### Detailed Description of Embodiments

Hereafter, embodiments of the secondary battery and power consuming device of the present application are specifically disclosed in the detailed description with reference to the accompanying drawings as appropriate. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed herein, and "0-5" is just an abbreviated representation of combinations of these numerical values. In addition, when a parameter is expressed as an integer ≥ 2, it is equivalent to disclosing that the parameter is, for example, an integer of 2, 3, 4, 5, 6, 7, 8, 9, 10, 11, 12, etc.

Unless otherwise stated, all the embodiments and optional embodiments of the present application may be combined with one another to form new technical solutions, and such technical solutions should be considered to be included in the disclosure of the present application.

Unless otherwise stated, all the technical features and optional technical features of the present application may be combined with one another to form new technical solutions, and such technical solutions should be considered to be included in the disclosure of the present application.

Unless otherwise stated, all the steps of the present application may be performed sequentially or randomly, preferably sequentially. For example, the method comprising steps (a) and (b) indicates that the method may comprise steps (a) and (b) performed sequentially, or may also comprise steps (b) and (a) performed sequentially. For example, reference to "the method may further comprise step (c)" indicates that step (c) may be added to the method in any order, e.g., the method may comprise steps (a), (b), and (c), steps (a), (c), and (b), or also steps (c), (a), and (b), etc.

The terms "comprise" and "include" mentioned in the present application are open-ended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

Unless otherwise stated, the terms used in the present application have the meaning well-known to those skilled in the art.

Unless otherwise stated, the values of the parameters mentioned in the present application may be determined by various measurement methods commonly used in the art, for example, may be determined according to the measurement methods illustrated in the present application.

In the present application, the term "active ion" refers to an ion that can be intercalated and deintercalated back and forth between a positive electrode and a negative electrode of a secondary battery, including but not limited to a lithium ion, unless otherwise stated.

In the present application, the term "more" refers to two or more.

With the increasingly extensive use of secondary batteries, higher requirements have also been placed on secondary batteries in terms of energy density, fast charging performance, service life and safety performance. The inventors have found that the key to improving the dynamic performance, especially the fast charging performance, of the secondary battery is to improve the dynamic performance of the negative electrode. At present, the dynamic performance of the negative electrode is mostly improved by reducing the areal density or the compacted density of the negative electrode film layer. However, a large number of studies have proven that the above methods of improving the dynamics of the negative electrode only improve the dynamic performance of the battery in the early stage of charging to a certain extent, and have no obvious effect on improving the dynamic performance of the battery at the end of charging, resulting in the failure to effectively improve the dynamic performance of the secondary battery, and even making it impossible to actually charge the secondary battery at a high rate. In addition, the energy density of the secondary battery will also be significantly reduced. The energy density of the secondary battery can be improved by, for example, increasing the coating weight and/or compacted density of the negative electrode film layer, but this will lead to a deterioration in the service life and dynamic performance of the secondary battery; in addition, it will also bring about a significant increase in the expansion force of the battery, which may easily lead to the bridge cutoff problem of the electrolyte solution and affect the safety performance of the secondary battery.

Therefore, it is necessary to provide a secondary battery, which can not only have a high energy density, but also good dynamic performance, long service life and high safety performance.

The inventors further conducted a lot of researches and skillfully improved the composition of the negative electrode film layer, breaking the above bottleneck.

Specifically, a first aspect of an embodiment of the present application provides a secondary battery.

The type of the secondary battery is not particularly limited in the present application. For example, the secondary battery may be a lithium-ion battery. Generally, the secondary battery comprises a positive electrode plate, a negative electrode plate, and an electrolyte etc. During the charge/discharge process of the secondary battery, active ions are intercalated and deintercalated back and forth between the positive electrode plate and the negative electrode plate, and the electrolyte functions for active ions conduction between the positive electrode plate and the negative electrode plate. The type of the electrolyte is not particularly limited in the present application, and can be selected according to actual requirements. For example, the electrolyte may be selected from at least one of a solid electrolyte and a liquid electrolyte (i.e., an electrolyte solution). The secondary battery using an electrolyte solution and some secondary batteries using a solid electrolyte further may comprise a separator. The separator is arranged between the positive electrode plate and the negative electrode plate, and functions for isolation.

### [Negative electrode plate]

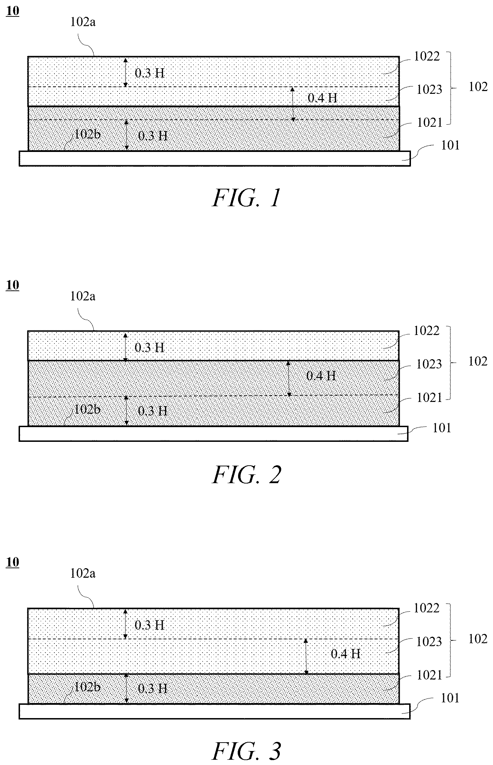

Figs. 1 to 3 show schematic diagrams of an embodiment of a negative electrode plate of the present application. As shown in Figs. 1 to 3, the negative electrode plate 10 comprises a negative electrode current collector 101 and a negative electrode film layer 102 formed on at least one surface of the negative electrode current collector 101, the negative electrode film layer 102 has a first surface 102a away from the negative electrode current collector 101 and a second surface 102b opposite to the first surface 102a, and the thickness of the negative electrode film layer 102 is denoted as H. An area within a thickness range from the second surface 102b of the negative electrode film layer to 0.3 H is denoted as a first area 1021 of the negative electrode film layer, and an area within a thickness range from the first surface 102a of the negative electrode film layer to 0.3 H is denoted as a second area 1022 of the negative electrode film layer. The first area 1021 comprises a first active material, the first active material comprises a first carbon-based material, and the first carbon-based material has a pore structure; and the second area 1022 comprises a second active material, and the second active material comprises a second carbon-based material.

**In** the present application, the "first carbon-based material has a pore structure" means that the first carbon-based material has pore structures that can be directly observed from a cross-sectional image (e.g., a scanning electron microscope image at a magnification of 1000 x), that is, the pore structures in the raw material for preparing the first carbon-based material are not completely filled.

The inventors have found in the research that when the first area of the negative electrode film layer comprises a first carbon-based material, the second area comprises a second carbon-based material that is different from the first carbon-based material, and the first carbon-based material has a pore structure, it enables the secondary battery to have not only a high energy density but also high safety performance, and good dynamic performance, cycling performance and storage performance.

The first carbon-based material has a pore structure and is easily deformed during cold pressing. When the first carbon-based material is present in the first area of the negative electrode film layer, it can effectively reduce the rolling pressure of the negative electrode plate, and can further effectively reduce particle damage as well as the occurrence of side reactions. The pore structure of the first carbon-based material can also reserve the required expansion space for the volume change of particles, thereby reducing the risk of particle breakage to generate new interfaces, and further reducing the occurrence of side reactions. The pore structure of the first carbon-based material can also play a role in buffering the volume expansion of the negative electrode film layer. In addition, when the first carbon-based material is present in the first area of the negative electrode film layer, its adverse impact on the dynamic performance of the secondary battery can be reduced, and its advantages of high capacity and high compacted density can be fully utilized, thereby improving the energy density of the secondary battery. Therefore, the negative electrode plate provided by the present application can simultaneously have a high compacted density, low volume change and good active ion transport performance, which further enables the secondary battery to have not only a high energy density but also high safety performance, and good dynamic performance, cycling performance and storage performance.

The second area of the negative electrode film layer comprises a second carbon-based material different from the first carbon-based material.

In some embodiments, the tap density of the second carbon-based material is greater than that of the first carbon-based material. The second carbon-based material has a larger tap density, and its particles are usually smaller and have better particle stacking performance. On the one hand, it is beneficial to increasing the speed of active ions intercalating into the negative electrode film layer, and on the other hand, it is beneficial for the negative electrode film layer to have a reasonable pore distribution in the thickness direction, which can improve the infiltration and retention properties of the negative electrode film layer to the electrolyte solution. Therefore, by adjusting the tap density of the second carbon-based material to be greater than that of the first carbon-based material, it is beneficial for the secondary battery to have both good dynamic performance and cycling performance simultaneously.

In some embodiments, the graphitization degree of the second carbon-based material is less than that of the first carbon-based material. The second carbon-based material has a lower graphitization degree and a larger interlayer spacing, which is beneficial to the rapid deintercalation of active ions; and the first carbon-based material has a higher graphitization degree and thus a higher gram capacity. Therefore, by adjusting the graphitization degree of the second carbon-based material to be less than that of the first carbon-based material, it is beneficial for the secondary battery to have a high energy density and good dynamic performance simultaneously.

In some embodiments, the powder OI value of the second carbon-based material is less than that of the first carbon-based material. The second carbon-based material has a smaller powder OI value, and the particles have active ion intercalating holes in all directions, which is beneficial to quickly receiving active ions from the positive electrode; in addition, it is also beneficial to reducing the expansion rate when active ions are intercalated and reducing the thickness expansion rate of the negative electrode film layer. Therefore, by adjusting the powder OI value of the second carbon-based material to be less than that of the first carbon-based material, it is beneficial to further improving the dynamic performance and safety performance of the secondary battery.

In some embodiments, the gram capacity of the second carbon-based material is less than that of the first carbon-based material. The second carbon-based material has a lower gram capacity and a larger interlayer spacing, which is beneficial to the rapid deintercalation of active ions. When the first carbon-based material with a high capacity is present in the first area of the negative electrode film layer, and the second carbon-based material with good active ion transport performance is present in the second area of the negative electrode film layer, it is beneficial for the secondary battery to have a high energy density and good dynamic performance simultaneously.

In some embodiments, the volume distribution particle size Dv50 of the second carbon-based material is less than that of the first carbon-based material. The second carbon-based material has a smaller volume distribution particle size Dv50 and more surface active sites, which is beneficial to the rapid deintercalation of active ions. In addition, when the first carbon-based material with a larger volume distribution particle size Dv50 is present in the first area of the negative electrode film layer and the second carbon-based material with a smaller volume distribution particle size Dv50 is present in the second area of the negative electrode film layer, it is also beneficial for the negative electrode film layer to form a reasonable pore structure, such that the negative electrode film layer has a reasonable pore distribution in the thickness direction. On the one hand, the compacted density of the negative electrode film layer can be improved, and on the other hand, the infiltration and retention properties of the negative electrode film layer to the electrolyte solution can be improved. Therefore, by adjusting the volume distribution particle size Dv50 of the second carbon-based material to be less than that of the first carbon-based material, it is beneficial for the secondary battery to have a high energy density, and good cycling performance, storage performance and dynamic performance simultaneously.

In some embodiments, the specific surface area of the second carbon-based material is larger than that of the first carbon-based material. The second carbon-based material has a larger specific surface area and more surface active sites, which is beneficial to the rapid deintercalation of active ions. In addition, when the first carbon-based material with a smaller specific surface area is present in the first area of the negative electrode film layer and the second carbon-based material with a larger specific surface area is present in the second area of the negative electrode film layer, it is also beneficial for the negative electrode film layer to form a reasonable pore structure, such that the negative electrode film layer has a reasonable pore distribution in the thickness direction. On the one hand, the compacted density of the negative electrode film layer can be improved, and on the other hand, the infiltration and retention properties of the negative electrode film layer to the electrolyte solution can be improved. Therefore, by adjusting the specific surface area of the second carbon-based material to be larger than that of the first carbon-based material, it is beneficial for the secondary battery to have a high energy density, and good cycling performance, storage performance and dynamic performance simultaneously.

In some embodiments, the powder compacted density of the second carbon-based material under a pressure of 50,000 N is less than that of the first carbon-based material under a pressure of 50,000 N. The powder compacted density of the first carbon-based material is relatively high, which is beneficial for the negative electrode film layer to form a good electron conduction network; and the second carbon-based material has a smaller powder compacted density, which is beneficial for the negative electrode film layer to have good infiltration and retention properties to the electrolyte solution. Therefore, when the second carbon-based material with a smaller powder compacted density is present in the second area of the negative electrode film layer and the first carbon-based material with a larger powder compacted density is present in the first area of the negative electrode film layer, it is beneficial for the negative electrode film layer to have good active ion and electron transport performances simultaneously, which is further beneficial for the secondary battery to have a high energy density, and good cycling performance and dynamic performance simultaneously.

In some embodiments, the X-ray diffraction pattern of the first carbon-based material does not have a diffraction peak of the crystal face 012 of a phase 3R. A 3R (Rhombohedral) phase refers to a rhombohedral phase crystalline carbon with a stacking structure of ABCABC... The first carbon-based material does not have a diffraction peak of the crystal face 012 of a phase 3R, so the first carbon-based material particles have fewer internal defects, which can further reduce the occurrence of side reactions and the irreversible consumption of active ions, thereby improving the first coulombic efficiency, cycling performance and storage performance of the secondary battery.

In some embodiments, the X-ray diffraction pattern of the first carbon-based material has a diffraction peak of the crystal face 101 of a phase 3R. As the first carbon-based material has a diffraction peak of the crystal face 101 of a phase 3R, there may be more active sites on the surface of the first carbon-based material, which is beneficial to the rapid deintercalation of active ions.

In some embodiments, the first carbon-based material satisfies 0 < I_{3R(101)}/I_{2H(004)} ≤ 0.100,optionally, 0.005 ≤ I_{3R(101)}/I_{2H(004)} ≤ 0.100, 0.006 ≤ I_{3R(101)}/I_{2H(004)} ≤ 0.080, 0.007 ≤ I_{3R(101)}/I_{2H(004)} ≤ 0.072, 0.008 ≤ I_{3R(101)}/I_{2H(004)} ≤ 0.065, or 0.010 ≤ I_{3R(101)}/I_{2H(004)} ≤ 0.060. I_{3R(101)} is the peak intensity of a diffraction peak of the crystal face 101 of the phase 3R in a X-ray diffraction pattern of the first carbon-based material, and I_{2H(004)} is the peak intensity of a diffraction peak of the crystal face 004 of a phase 2H in a X-ray diffraction pattern of the first carbon-based material. When the I_{3R(101)}/I_{2H(004)} of the first carbon-based material is within the ranges above, there may be more active sites on the surface of the first carbon-based material, which is beneficial to is beneficial to the rapid deintercalation of active ions; in addition, the surface stability of the first carbon-based material is relatively high, which can effectively reduce side reactions on the surface as well as the consumption of active ions.

In the present application, in the X-ray diffraction pattern of the first carbon-based material, the 2θ of the diffraction peak of the 101 crystal face of the phase 3R is within a range of 43° - 44°, the 2θ of the diffraction peak of the crystal face 004 of the phase 2H is within a range of 53° - 55°, and the 20 of the diffraction peak of the crystal face 012 of the phase 3R is within a range of 46° - 47°. The X-ray diffraction pattern of the first carbon-based material can be obtained using an X-ray diffractometer with reference to JIS K 0131-1996. Test conditions: the first carbon-based material is prepared into a sample by a flat-plate sample preparation method, with CuK α ray as a radiation source and a copper target as an anode target, a voltage of 40 KV, a current of 40 mA, an anti-scattering slit of 1 mm, a scanning 2θ angle range of 20°-80°, a step size of 0.01671°, a time of each step of 0.24 s, and a scanning rate of 4°/min. The test instrument may be a Bruker D8 Discover X-ray diffractometer.

In some embodiments, the X-ray diffraction pattern of the first carbon-based material does not have a diffraction peak of the crystal face 012 of the phase 3R, and the first carbon-based material satisfies 0 < I_{3R(101)}/I_{2H(004)} ≤ 0.100.

In some embodiments, the first carbon-based material comprises one or more pore structures having a pore area greater than or equal to 0.15 µm², optionally one or more pore structures having a pore area of 0.15 µm² - 2.0 µm². When the first carbon-based material comprises the pore structures having a pore area mentioned above, the pore structures can reserve a required expansion space for the volume change of the particles thereof, such that the risk of particle breakage to generate new interfaces can be further reduced, which can further reduce the occurrence of side reactions and improve the cycling performance and storage performance of the secondary battery; in addition, the pore structures can also buffer the volume change of the negative electrode film layer, reduce the thickness expansion rate of the negative electrode film layer and improve the safety performance of the secondary battery.

In some embodiments, the first carbon-based material comprises an outer area and an inner area inside the outer area, wherein the outer area is an area extending from the surface of a particle of the first carbon-based material to the inside of the particle by a distance of 0.25 L, wherein L is the short axis length of the particle of the first carbon-based material. The outer area has a total pore area denoted as S₁, the inner area has a total pore area denoted as S₂, and S₂ > S₁.

When the first carbon-based material also satisfies S₂ > S₁, the first carbon-based material further has the following characteristics: the inner area has a large number of pores and/or a large pore size, while the outer area has a small number of pores and/or a small pore size. The pore structures of the inner area of the first carbon-based material can effectively reduce the rolling pressure of the negative electrode plate, effectively reduce particle damage, and also can reserve a required expansion space for the volume change of particles, thereby reducing the risk of particle breakage to generate new interfaces, and further effectively reducing the occurrence of side reactions; and the outer area of the first carbon-based material has a small number of pores and/or a small pore size, such that the first carbon-based material particles can have a stable structure, and an electrolyte solution can be prevented from infiltrating into the pore structures inside the first carbon-based material particles as much as possible, thereby further reducing the occurrence of side reactions and reducing the consumption of active ions by SEI film formation inside the particles. Therefore, when the first carbon-based material further satisfies S₂ > S₁, the first coulombic efficiency of the secondary battery can be improved, and the cycling performance and storage performance of the secondary battery can be further improved.

In some embodiments, 1.5 ≤ S₂/S₁ ≤ 500, 2 ≤ S₂/S₁ ≤ 450, 2.2 ≤ S₂/S₁ ≤ 400, 2.4 ≤ S₂/S₁ ≤ 300, 2.5 ≤ S₂/S₁ ≤ 250, 2.6 ≤ S₂/S₁ ≤ 200, 2.8 ≤ S₂/S₁ ≤ 150, or 3.0 ≤ S₂/S₁ ≤ 100. The inventors have found in further researches that when S₂/S₁ of the first carbon-based material further satisfies the above range, the secondary battery can better have a high energy density, and good cycling performance and storage performance simultaneously.

In the present application, the total pore area S₁ of the outer area and the total pore area S₂ of the inner area of the first carbon-based material can be obtained by measuring a cross-sectional image of the first carbon-based material.

In the present application, the cross-sectional image of the first carbon-based material comprises a cross-sectional image through the center of the first carbon-based material. The "particle center" refers to a range within a radius extending 0.1 µm from a geometric center of the particle to the particle surface.

In the present application, the short axis length of the particle refers to the minimum value of a line connecting two points on the surface of the particle passing through the geometric center of the particle.

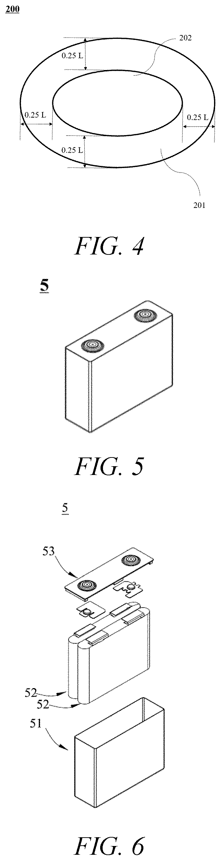

Fig. 4 shows a schematic view of a cross-sectional image of a particle of the first carbon-based material 200 of the present application. The cross-sectional image passes through the particle center of the first carbon-based material 200. As shown in Fig. 4, L represents the short axis length of the particle of the first carbon-based material 200, an area extending from the surface of the particle of the first carbon-based material 200 to the inside of the particle by a distance of 0.25 L is an outer area 201, and an area inside the outer area 201 is an inner area 202.

A cross-section of the first carbon-based material can be prepared using a cross-section polisher (such as a IB-09010 CP argon ion cross-section polisher of JEOL corporation, Japan). Then referring to JY/T010-1996, the section of the first carbon-based material is scanned using a scanning electron microscope (e.g., a Sigma 300 scanning electron microscope, ZEISS, Germany). Finally, the total pore area S₁ of the outer area and the total pore area S₂ of the inner area of the first carbon-based material are calculated by an image processing software (e.g., AVIZO).

In some embodiments, the short axis length L of a particle of the first carbon-based material satisfies L ≥ 5 µm, optionally, 6 µm ≤ L ≤ 25 µm, 6 µm ≤ L ≤ 20 µm, 7 µm ≤ L ≤ 20 µm, 8 µm ≤ L ≤ 20 µm, 8 µm ≤ L ≤ 18 µm, or 8 µm ≤ L ≤ 16 µm.

In some embodiments, the area of the pore structures in the outer area of the first carbon-based material is less than or equal to 0.2 µm², optionally less than or equal to 0.1 µm². The inventors have also found in further researches that by controlling the area of the pore structures in the outer area of the first carbon-based material to be within the above range, the outer area of the first carbon-based material can have a compact structure. Therefore, the structural stability of the first carbon-based material can be effectively improved, an electrolyte solution can be prevented from penetrating into the pore structures inside the first carbon-based material particles as much as possible, thereby reducing the occurrence of side reactions and further effectively improving the cycling performance and storage performance of the secondary battery. Of course, the present application is not intended to limit the area of all pore structures in the outer area of the first carbon-based material to be less than or equal to 0.2 µm², for example, 95% or more, optionally 99% or more of the area, of the pore structures can be controlled to be less than or equal to 0.2 µm², optionally less than or equal to 0.1 µm².

In some embodiments, the inner area of the first carbon-based material comprises one or more pore structures having an area greater than or equal to 0.15 µm², optionally one or more pore structures having an area of 0.15 µm² - 2.0 µm². The inventors have also found in further researches that when the inner area of the first carbon-based material comprises pore structures of the above size, on the one hand, the rolling pressure of the negative electrode plate can be effectively reduced, the particle damage can be effectively reduced, and a sufficient and stable expansion space can be reserved for the volume change of the first carbon-based material particles, reducing the risk of breakage of the first carbon-based material particles, and on the other hand, the compacted density of the negative electrode film layer can be also improved, improving the energy density of the secondary battery.

In some embodiments, at least part of the surface of the first carbon-based material has a carbon coating layer. Optionally, 80% or more of the surface of the first carbon-based material is covered with a carbon coating layer; and further, 90% - 100% of the surface of the first carbon-based material is covered with a carbon coating layer.

In some embodiments, the carbon may comprise amorphous carbon and/or crystalline carbon with a graphitization degree between 65% and 89%. Therefore, the dynamic performance of the secondary battery can be improved.

Of course, in some embodiments, the first carbon-based material may not have a carbon coating layer. The first carbon-based material of the present application has a stable surface. When there is no carbon coating layer on the surface thereof, it is beneficial to maintaining its low side reaction activity and reducing the occurrence of side reactions, thereby further improving the cycling performance and storage performance of the secondary battery.

In some embodiments, the first carbon-based material comprises primary particles, optionally, the number percentage of the primary particles in the first carbon-based material is ≥ 70%, for example, ≥ 75%, ≥ 80%, ≥ 85%, ≥ 90%, ≥ 95%, or ≥ 98%. When the first carbon-based material contains an appropriate proportion of primary particles, it can have a higher structural stability, and the occurrence of side reactions is reduced, thereby improving the cycling performance and storage performance of the secondary battery; in addition, the compacted density of the negative electrode film layer can also be improved, thereby improving the energy density of the secondary battery.

In the present application, the number percentage of the primary particles in the first carbon-based material refers to: a test sample is randomly taken in a negative electrode film layer, a plurality of test areas are randomly taken in the test sample, images of the plurality of test areas are acquired by using a scanning electron microscope, the number percentage of the first carbon-based material with a primary particle morphology in each image with respect to the total number of the first carbon-based material particles is count, with an average value of a plurality of statistical results being a number percentage of the primary particle in the first carbon-based material.

In some embodiments, the first carbon-based material may all be primary particles, that is, the number percentage of the primary particles in the first carbon-based material is 100%.

In some embodiments, the mass percentage of the first carbon-based material in the first active material is ≥ 50 wt%, optionally 60 wt% - 100 wt%.

The inventors have found in further researches that when the first carbon-based material, on the basis of satisfying the above-mentioned design, further satisfies one or more of the following conditions, the performance of the secondary battery can be further improved, for example, at least one of the energy density, dynamic performance, cycling performance and storage performance of the secondary battery can be improved.

In some embodiments, the specific surface area of the first carbon-based material is 0.6 m²/g - 2.4 m²/g, optionally 0.8 m²/g - 1.6 m²/g. The first carbon-based material has a smaller specific surface area, such that the consumption of active ions by SEI film formation can be reduced, thereby improving the initial coulombic efficiency, cycling performance and storage performance of the secondary battery.

In some embodiments, the volume distribution particle size Dv50 of the first carbon-based material is 8.0 µm - 30.0 µm, optionally 10.0 µm - 20.0 µm.

In some embodiments, the volume distribution particle size Dv90 of the first carbon-based material is 16.0 µm - 45.0 µm, optionally 17.0 µm - 42.0 µm.

When the volume distribution particle size Dv50 and/or Dv90 of the first carbon-based material is within the ranges above, it is beneficial to improving the active ion and electron transport performances, thereby further improving the dynamic performance of the secondary battery; in addition, the specific surface area of the first carbon-based material can also be reduced, and the occurrence of side reactions can be reduced, thereby improving the cycling performance and storage performance of the secondary battery.

In some embodiments, the (Dv90-Dv10)/Dv50 of the first carbon-based material is ≤ 1.55, optionally 0.90-1.50. When (Dv90-Dv10)/Dv50 of the first carbon-based material is within the above range, its particle stacking performance is good, which is beneficial to improving the compacted density of the negative electrode film layer, thereby further improving the energy density of the secondary battery; in addition, it is also beneficial for the negative electrode film layer to have a reasonable pore structure, which improves the dynamic performance of the secondary battery.

In some embodiments, the powder compacted density of the first carbon-based material under a pressure of 50,000 N is 1.80 g/cm³ - 2.10 g/cm³, optionally 1.85 g/cm³ - 2.05 g/cm³. When the powder compacted density of the first carbon-based material is within the above range, the compacted density of the negative electrode film layer can be improved, such that the energy density of the secondary battery can be improved; and it is also beneficial for the negative electrode film layer to have a reasonable pore structure, which improves the active ion and electron transport performances, thereby improving the dynamic performance of the secondary battery.

In some embodiments, the tap density of the first carbon-based material is 0.80 g/cm³ - 1.20 g/cm³, optionally 0.90 g/cm³ - 1.18 g/cm³. When the tap density of the first carbon-based material is within the ranges above, the compacted density of the negative electrode film layer can be improved, such that the energy density of the secondary battery can be improved; and it is also beneficial for the negative electrode film layer to have a reasonable pore structure, which improves the active ion and electron transport performances, thereby improving the dynamic performance of the secondary battery.

In some embodiments, the graphitization degree of the first carbon-based material is 94% - 98%, optionally 95% - 97%. When the graphitization degree of the first carbon-based material is within the ranges above, it is beneficial to improving the energy density of the secondary battery.

In some embodiments, the powder OI value of the first carbon-based material is 10-35, optionally 13-30. The first carbon-based material has a smaller powder OI value, which is beneficial to reducing the expansion rate when active ions are intercalated and reducing the thickness expansion rate of the negative electrode film layer, thereby further improving the cycling performance, storage performance and safety performance of the secondary battery.

In some embodiments, the gram capacity of the first carbon-based material is 355 mAh/g - 371 mAh/g, optionally 360 mAh/g - 370 mAh/g. When the gram capacity of the first carbon-based material is within the ranges above, it is beneficial to improving the energy density of the secondary battery.

In some embodiments, the surface of the second carbon-based material does not have a carbon coating layer. The second carbon-based material of the present application has a relatively stable surface. When there is no coating layer on the surface thereof, it is beneficial to maintaining its low side reaction activity and reducing the occurrence of side reactions, thereby further improving the cycling performance and storage performance of the secondary battery.

In some embodiments, the second carbon-based material includes secondary particles, and optionally, the number percentage of the secondary particles in the second carbon-based material is ≥ 60%, optionally 60% - 90%, optionally 70% - 85%. When the second carbon-based material contains an appropriate proportion of secondary particles, the active ion channels in the negative electrode film layer can be increased and the active ion intercalation path can be shorten, which can further improve the dynamic performance of the secondary battery and can reduce the polarization of a battery and the occurrence of side reactions, thereby enabling the secondary battery to have good cycling performance and storage performance simultaneously.

In the present application, the number percentage of the secondary particles in the second carbon-based material refers to: a test sample is randomly taken in a negative electrode film layer, a plurality of test areas are randomly taken in the test sample, images of the plurality of test areas are acquired by using a scanning electron microscope, the number percentage of the second carbon-based material with a secondary particle morphology in each image with respect to the total number of the second carbon-based material particles is count, with an average value of a plurality of statistical results being the number percentage of the secondary particle in the second carbon-based material.

The inventors have found in further researches that when the second carbon-based material, on the basis of satisfying the above-mentioned design, further satisfies one or more of the following conditions, the performance of the secondary battery can be further improved, for example, at least one of the energy density, dynamic performance, cycling performance and storage performance of the secondary battery can be improved.

In some embodiments, the volume distribution particle size Dv50 of the second carbon-based material is 6 µm - 24 µm, optionally 9 µm - 13 µm. When the volume distribution particle size Dv50 of the second carbon-based material is within the ranges above, it is beneficial to improving the active ion and electron transport performances, thereby further improving the dynamic performance of the secondary battery; in addition, the specific surface area of the second carbon-based material can also be reduced, and the occurrence of side reactions can be reduced, thereby improving the cycling performance and storage performance of the secondary battery.

In some embodiments, the specific surface area of the second carbon-based material is 1.2 m²/g - 3.0 m²/g, optionally 1.2 m²/g - 1.8 m²/g. By adjusting the specific surface area of the second carbon-based material to be within the ranges above, it is beneficial to reducing the occurrence of side reactions and the consumption of active ions by SEI film formation, which is beneficial for the secondary battery to have high first coulombic efficiency, and good cycling performance and storage performance simultaneously.

In some embodiments, the powder compacted density of the second carbon-based material under a pressure of 50,000 N is 1.6 g/cm³ - 1.95 g/cm³, optionally 1.65 g/cm³ - 1.85 g/cm³. When the powder compacted density of the second carbon-based material is within the ranges above, the compacted density of the negative electrode film layer can be improved, such that the energy density of the secondary battery can be improved; and it is also beneficial for the negative electrode film layer to have a reasonable pore structure, which improves the active ion and electron transport performances, thereby improving the dynamic performance of the secondary battery.

In some embodiments, the tap density of the second carbon-based material is 0.95 g/cm³ - 1.35 g/cm³, optionally 1.05 g/cm³ - 1.30 g/cm³. When the tap density of the second carbon-based material is within the ranges above, the compacted density of the negative electrode film layer can be improved, such that the energy density of the secondary battery can be improved; and it is also beneficial for the negative electrode film layer to have a reasonable pore structure, which improves the active ion and electron transport performances, thereby improving the dynamic performance of the secondary battery.

In some embodiments, the graphitization degree of the second carbon-based material is ≥ 91.5%, optionally 91.5% - 95.4%. By adjusting the graphitization degree of the second carbon-based material to be within the ranges above, it is beneficial to improving the active ion transport performance of the negative electrode film layer, which is beneficial for the secondary battery to have a high energy density and good dynamic performance simultaneously.

In some embodiments, the powder OI value of the second carbon-based material is 2-5.5, optionally 2.5-5. The second carbon-based material has a smaller powder OI value, and the particles have active-ion intercalating holes in all directions, such that the active ions from the positive electrode can be quickly received, thereby further improving the dynamic performance of the secondary battery. Moreover, in this case, the second carbon-based material particles have a high degree of isotropy, which is beneficial to reducing the expansion rate when active ions are intercalated and reducing the thickness expansion rate of the negative electrode film layer, thereby further improving the cycling performance, storage performance and safety performance of the secondary battery.

In some embodiments, the gram capacity of the second carbon-based material is 340 mAh/g - 360 mAh/g, optionally 348 mAh/g - 356 mAh/g. When the gram capacity of the second carbon-based material is within the ranges above, on the one hand, the energy density of the secondary battery can be improved, and on the other hand, the second carbon-based material can also have good active ion transport performance, which is further beneficial to improving the dynamic performance of the secondary battery.

In some embodiments, the second carbon-based material comprises graphite. optionally, the graphite comprises at least one of artificial graphite and natural graphite.

In some embodiments, the second carbon-based material comprises artificial graphite and thus has good dynamic performance, which is beneficial to improving the speed of active ions intercalating into the negative electrode film layer, improving the active ion transport performance of the negative electrode film layer, and improving the dynamic performance of the secondary battery; in addition, the second carbon-based material is located in the second area of the negative electrode film layer, which is beneficial to giving full play to its advantages of excellent dynamic performance.

In some embodiments, the second carbon-based material comprises artificial graphite with a secondary particle morphology, and optionally, the number percentage of the artificial graphite with a secondary particle morphology in the second carbon-based material is ≥ 60%, optionally 60% - 90%, optionally 70% - 85%.

In the present application, the number percentage of artificial graphite with a secondary particle morphology in the second carbon-based material refers to: a test sample is randomly taken in a negative electrode film layer, a plurality of test areas are randomly taken in the test sample, images of the plurality of test areas are acquired by using a scanning electron microscope, the number percentage of artificial graphite with a secondary particle morphology in the second area of the negative electrode film layer in each image with respect to the total number of the second carbon-based material particles is count, with an average value of a plurality of statistical results being the number percentage of artificial graphite with a secondary particle morphology in the second carbon-based material.

In some embodiments, the first active material further comprises a third carbon-based material, and the third carbon-based material comprises artificial graphite with a primary particle morphology. The combination of the first carbon-based material and the third carbon-based material is beneficial for the negative electrode film layer to have a suitable pore structure, and is also beneficial to improving the active ion transport performance of the negative electrode film layer.

In some embodiments, the third carbon-based material comprises artificial graphite with a primary particle morphology, and the surface of the artificial graphite does not have a carbon coating layer. The third carbon-based material of the present application has a relatively stable surface. When there is no carbon coating layer on the surface thereof, it is beneficial to maintaining its low side reaction activity and reducing the occurrence of side reactions, thereby further improving the cycling performance and storage performance of the secondary battery.

In some embodiments, the mass percentage of the third carbon-based material in the first active material is less than or equal to 50 wt%, optionally 20 wt% - 50 wt%, 20 wt% - 40 wt%, 30 wt% - 50 wt% and 30 wt% - 40 wt%.

The inventors have found in further researches that when the third carbon-based material, on the basis of satisfying the above-mentioned design, further satisfies one or more of the following conditions, the performance of the secondary battery can be further improved, for example, at least one of the energy density, dynamic performance, cycling performance and storage performance of the secondary battery can be improved.

In some embodiments, the number percentage of the artificial graphite with a primary particle morphology in the third carbon-based material is ≥ 60%, optionally 70% - 95%. When the first carbon-based material contains an appropriate proportion of primary particles, it can have a higher structural stability, and the occurrence of side reactions is reduced, thereby improving the cycling performance and storage performance of the secondary battery; in addition, the compacted density of the negative electrode film layer can also be improved, thereby improving the energy density of the secondary battery.

In the present application, the number percentage of the artificial graphite with a primary particle morphology in the third carbon-based material refers to: a test sample is randomly taken in a negative electrode film layer, a plurality of test areas are randomly taken in the test sample, images of the plurality of test areas are acquired by using a scanning electron microscope, the number percentage of artificial graphite with a primary particle morphology in the first area of the negative electrode film layer in each image with respect to the total number of the third carbon-based material particles is count, with an average value of a plurality of statistical results being the number percentage of artificial graphite with a primary particle morphology in the third carbon-based material.

In some embodiments, the graphitization degree of the third carbon-based material is 92.5% - 95.5%, optionally 92.7% - 95.5%. When the graphitization degree of the third carbon-based material is within the ranges above, it is beneficial to improving the active ion transport performance of the negative electrode film layer, which is beneficial for the secondary battery to have a high energy density and good dynamic performance simultaneously.

In some embodiments, the powder OI value of the third carbon-based material is 4.5-11.5, optionally 4.5-11.0. The third carbon-based material has a smaller powder OI value, and the particles have active-ion intercalating holes in all directions, such that the active ions from the positive electrode can be quickly received, thereby further improving the dynamic performance of the secondary battery. Moreover, in this case, the third carbon-based material particles have a high degree of isotropy, which is beneficial to reducing the expansion rate when active ions are intercalated and reducing the thickness expansion rate of the negative electrode film layer, thereby further improving the cycling performance and storage performance of the secondary battery.

In some embodiments, the (Dv90-Dv10)/Dv50 of the third carbon-based material is ≤ 1.65, optionally 0.90-1.65. When (Dv90-Dv10)/Dv50 of the third carbon-based material is within the ranges above, it exhibits a good particle stacking performance, which is beneficial to improving the compacted density of the negative electrode film layer, thereby further improving the energy density of the secondary battery; in addition, it is also beneficial for the negative electrode film layer to have a reasonable pore structure, which improves the cycling performance and dynamic performance of the secondary battery.

In some embodiments, the volume distribution particle size Dv50 of the third carbon-based material is 12.0 µm - 22.0 µm, optionally 13.5 µm - 20.0 µm. When the volume distribution particle size Dv50 of the third carbon-based material is within the ranges above, it is beneficial to improving the active ion and electron transport performances, thereby further improving the dynamic performance of the secondary battery; in addition, the specific surface area of the third carbon-based material can be reduced, and the occurrence of side reactions can be reduced, thereby improving the cycling performance and storage performance of the secondary battery.

In some embodiments, the specific surface area of the third carbon-based material is 1.0 m²/g - 2.0 m²/g, optionally 1.05 m²/g - 1.95 m²/g. The third carbon-based material has a smaller specific surface area and a lower surface activity, which can reduce the consumption of active ions by SEI film formation, improve the first coulombic efficiency of the secondary battery, and also can improve the cycling performance and storage performance of the secondary battery.

In some embodiments, the tap density of the third carbon-based material is 0.95 g/cm³ - 1.25 g/cm³, optionally 1.00 g/cm³ - 1.25 g/cm³. When the tap density of the third carbon-based material is within the ranges above, the compacted density of the negative electrode film layer can be improved, such that the energy density of the secondary battery can be improved; and it is also beneficial for the negative electrode film layer to have a reasonable pore structure, which improves the active ion and electron transport performances, thereby improving the dynamic performance of the secondary battery.

In some embodiments, the gram capacity of the third carbon-based material is 350 mAh/g - 363 mAh/g, optionally 352 mAh/g - 362 mAh/g. When the gram capacity of the third carbon-based material is within the ranges above, on the one hand, the energy density of the secondary battery can be improved, and on the other hand, the active ion transport performance of the negative electrode film layer can be improved, which is further beneficial to improving the dynamic performance of the secondary battery.

As shown in Figs. 1 to 3, the negative electrode film layer 102 further comprises a middle area 1023 between the first area 1021 and the second area 1022 of the negative electrode film layer and having a thickness of 0.4 H (H represents the thickness of the negative electrode film layer 102).

In some embodiments, the middle area comprises the first active material and/or the second active material. For example, as shown in Fig. 2, the middle area 1023 may be the same as the first area 1021 in composition, such that the distribution area of the first active material in the thickness direction of the negative electrode film layer 102 is within the thickness range from the second surface 102b of the negative electrode film layer to 0.7 H; alternatively, as shown in Fig. 3, the middle area 1023 may be the same as the second area 1022 in composition, such that the distribution area of the second active material in the thickness direction of the negative electrode film layer 102 is within the thickness range from the first surface 102a of the negative electrode film layer to 0.7 H; alternatively, as shown in Fig. 1, the middle area 1023 comprises both the first active material and the second active material, and in this case, the middle area 1023 comprises both a layer structure comprising the first active material and a layer structure comprising the second active material, and these two layer structures may also have a layer interface.

In some embodiments, the first area of the negative electrode film layer may further comprises other negative electrode active materials known in the art in addition to the above first and third carbon-based materials. For example, it also can comprise a silicon-based material, which can improve the pore structure in the negative electrode film layer and facilitate the infiltration and liquid retention of the electrolyte solution, thereby improving the dynamic performance of the secondary battery; in addition, it can also improve the capacity of the negative electrode, thereby further improving the energy density of the secondary battery. Optionally, the silicon-based material may include one or more of elemental silicon, a silicon oxide, a silicon carbon composite, a silicon nitrogen composite, and a silicon alloy material.

In some embodiments, when the first area of the negative electrode film layer further comprises a silicon-based material, the mass percentage of the silicon-based material in the first area of the negative electrode film layer may be ≤ 10%, for example, 1% - 8%, 2% - 6% or 3% - 7%. In this case, the dynamic performance and energy density of the secondary battery can be improved, and at the same time, the secondary battery can have good cycling performance and storage performance simultaneously.

In some embodiments, the second area of the negative electrode film layer may further comprises other negative electrode active materials known in the art in addition to the above second carbon-based material. For example, it also can comprise a silicon-based material, which can improve the pore structure in the negative electrode film layer and facilitate the infiltration and liquid retention of the electrolyte solution, thereby improving the dynamic performance of the secondary battery; in addition, it can also improve the capacity of the negative electrode, thereby further improving the energy density of the secondary battery. Optionally, the silicon-based material may include one or more of elemental silicon, a silicon oxide, a silicon carbon composite, a silicon nitrogen composite, and a silicon alloy material.

In some embodiments, when the second area of the negative electrode film layer further comprises a silicon-based material, the mass percentage of the silicon-based material in the second area of the negative electrode film layer may be ≤ 10%, for example, 1% - 8%, 2% - 6% or 3% - 7%. In this case, the dynamic performance and energy density of the secondary battery can be improved, and at the same time, the secondary battery can have good cycling performance and storage performance simultaneously.

In some embodiments, both the first area and the second area comprise a silicon-based material, and the mass percentage of the silicon-based material in the first area is less than or equal to the mass percentage of the silicon-based material in the second area. During the charge/discharge process of a secondary battery, the volume expansion of the silicon-based material is greater than that of the carbon-based material, which is beneficial for the second area of the negative electrode film layer to have a higher porosity, thereby being beneficial to improving the infiltration properties of the negative electrode film layer to the electrolyte solution, improving the active ion transport performance of active ions, and improving the cycling performance and/or dynamic performance of the secondary battery. In addition, since the porosity of the second area of the negative electrode film layer is relatively high, the active ion transport performance of the first area of the negative electrode film layer can also be improved.

In some embodiments, the middle area of the negative electrode film layer further comprises a silicon-based material.

In some embodiments, the first area, the second area and the middle area of the negative electrode film layer further optionally comprise a negative electrode conductive agent and/or a negative electrode binder.

In the present application, the type of the negative electrode conductive agent is not particularly limited. As an example, the negative electrode conductive agent may include one or more of superconducting carbon, conductive graphite, acetylene black, carbon black, Ketjen black, carbon dots, carbon nanotubes, graphene and carbon nanofibers.

In the present application, the type of the negative electrode binder is not particularly limited. As an example, the negative electrode binder may include one or more of a styrene-butadiene rubber (SBR), a watersoluble unsaturated resin SR-1B, a water-based acrylic resin (for example, polyacrylic acid PAA, polymethacrylic acid PMAA, and sodium polyacrylate PAAS), polyacrylamide (PAM), polyvinyl alcohol (PVA), sodium alginate (SA), and carboxymethyl chitosan (CMCS).

In some embodiments, the first area, the second area and the middle area of the negative electrode film layer further optionally comprise other auxiliary agents. As an example, the other auxiliary agents may include a thickener, for example, sodium carboxymethyl cellulose (CMC) and a PTC thermistor material.

In some embodiments, the porosity of the negative electrode film layer is 18.0% - 36.0%, optionally 19.0% - 34.0%. This is beneficial for the negative electrode film layer to have a high capacity and an appropriate pore structure simultaneously, which is further beneficial for the secondary battery to have a high energy density, and good cycling performance, storage performance and dynamic performance simultaneously.

In some embodiments, the compacted density of the negative electrode film layer is 1.45 g/cm³ - 1.90 g/cm³, optionally 1.50 g/cm³ - 1.85 g/cm³. This is beneficial for the negative electrode film layer to have a high capacity, and good active ion and electron transport performances simultaneously, which is further beneficial for the secondary battery to have a high energy density, and good cycling performance, storage performance and dynamic performance simultaneously.

In some embodiments, the areal density of the negative electrode film layer is 5.0 mg/cm² - 25.0 mg/cm², optionally 5.5 mg/cm² - 22.5 mg/cm². This is beneficial for the negative electrode film layer to have a high capacity, and good active ion and electron transport performances simultaneously, which is further beneficial for the secondary battery to have a high energy density, and good cycling performance, storage performance and dynamic performance simultaneously.

In some embodiments, the OI value of the negative electrode film layer is ≤ 40.0, optionally 8.0-35.0. Therefore, it is beneficial to improving the active-ion intercalation performance of the negative electrode film layer and enabling the negative electrode film layer to have a lower thickness expansion rate, which is further beneficial for the secondary battery to have good cycling performance, storage performance and dynamic performance simultaneously.

In some embodiments, the thickness of the negative electrode film layer is 80 µm - 220 µm, optionally 100 µm - 200 µm.

In some embodiments, the negative electrode current collector may be a metal foil or a composite current collector. As an example of the metal foil, a copper foil may be used. The composite current collector may comprise a polymer material base layer and a metal material layer formed on at least one surface of the polymer material base layer. As an example, the metal material may include one or more of copper, a copper alloy, nickel, a nickel alloy, titanium, a titanium alloy, silver, and a silver alloy. As an example, the polymer material base layer may include one or more of polypropylene (PP), polyethylene terephthalate (PET), polybutylene terephthalate (PBT), polystyrene (PS), and polystyrene ethylene (PE).

The negative electrode plate does not exclude other additional functional layers in addition to the negative electrode film layer. For example, in some embodiments, the negative electrode plate of the present application further comprises a conductive primer (e.g., composed of a conductive agent and a binder) sandwiched between the negative electrode current collector and the negative electrode film layer and arranged on the surface of the negative electrode current collector. In some embodiments, the negative electrode plate of the present application further comprises a protective layer covering the surface of the negative electrode film layer.

The negative electrode current collector has two opposite surfaces in the thickness direction thereof, and the negative electrode film layer is provided on either or both of the two opposite surfaces of the negative electrode current collector. It should be noted that the parameters (e.g., compacted density, areal density, porosity, OI value, thickness, etc.) of each negative electrode film layer given by the present application refer to the parameters of the negative electrode film layer on either side of the negative electrode current collector. When the negative electrode film layers are provided on both sides of the negative electrode current collector, the parameters of the negative electrode film layer on either side satisfying the present application are deemed to fall within the scope of protection of the present application.

In the present application, whether there is a coating layer on the surface of a material (e.g., the first carbon-based material, the second carbon-based material, the third carbon-based material, etc.) can be determined by transmission electron microscopy.

In the present application, the specific surface area of the material (e.g., the first carbon-based material, the second carbon-based material, the third carbon-based material, etc.) has a well-known meaning in the art, and can be measured by instruments and methods well-known in the art. The specific surface area can be measured with reference to GB/T 19587-2017 using a nitrogen adsorption specific surface area analysis test method, and calculated with a BET (Brunauer Emmett Teller) method. The test instrument may be a Tri-Star 3020 specific surface area and pore size analysis tester from Micromeritics, US.

In the present application, the graphitization degree of the material (e.g., the first carbon-based material, the second carbon-based material, the third carbon-based material, etc.) has a well-known meaning in the art, and can be measured by instruments and methods known in the art. For example, the graphitization degree may be tested by an X-ray diffractometer (such as Bruker D8 Discover). The test can be done with reference to JIS K 0131-1996 and JB/T 4220-2011, an average interlayer spacing d₀₀₂ of a crystal face C(002) in a crystal structure of a material is obtained, and then the graphitization degree is calculated according to the formula g = (0.344 - d₀₀₂)/(0.344 - 0.3354) × 100%. In the above formula, d₀₀₂ is the average interlayer spacing of the crystal face C(002) in the crystal structure of the material, in nanometers (nm).

In the present application, the volume distribution particle sizes Dv10, Dv50 and Dv90 of the material (e.g., the first carbon-based material, the second carbon-based material, the third carbon-based material, etc.) have well-known meaning in the art, respectively represent the particle size corresponding to the cumulative volume distribution percentages of the material reaching 10%, 50% and 90%, and may be measured by instruments and methods known in the art. For example, the volume distribution particle sizes can be measured with reference to GB/T 19077-2016 using a laser particle size analyzer. The test instrument may be a Mastersizer 3000 laser particle size analyzer from Malvern Instruments (UK).

In the present application, the powder compacted density of the material (e.g., the first carbon-based material, the second carbon-based material, the third carbon-based material, etc.) has a well-known meaning in the art, and can be measured by instruments and methods known in the art. For example, the powder compacted density of the carbon material may be tested with reference to GB/T 24533-2009 using an electronic pressure testing machine (e.g., UTM7305 type electronic pressure testing machine). An exemplary measurement method is as follows: 1 g of a sample powder is weighed and added to a mold with a bottom area of 1.327 cm², pressurized to 5,000 kg and maintained at the pressure for 30 s, and then depressurized and held for 10 s, and then the powder compacted density of the material under a pressure of 50,000 N is recorded and calculated.

In the present application, the tap density of the material (e.g., the first carbon-based material, the second carbon-based material, the third carbon-based material, etc.) has a well-known meaning in the art, and can be measured by instruments and methods known in the art. For example, the tap density of the carbon material can be measured with reference to GB/T 5162-2006 using a powder tap density tester. The test instrument may be Bettersize Instruments (Dandong) BT-301, and the test parameters are as follows: vibration frequency: 250 ± 15 times/min, amplitude: 3 ± 0.2 mm, vibration number: 5000 times, graduated cylinder: 25 mL.

In the present application, the power OI value of the material (e.g., the first carbon-based material, the second carbon-based material, the third carbon-based material, etc.) has a well-known meaning in the art, and can be measured by instruments and methods known in the art. For example, the power OI value may be measured by an X-ray diffractometer (such as Bruker D8 Discover). The test can be done with reference to JIS K 0131-1996 and JB/T 4220-2011, the X- ray diffraction pattern of the powder sample is obtained, and then the power OI value of the sample is calculated according to OI value = I₀₀₄/I₁₁₀. I₀₀₄ is the integrated area of the diffraction peak of the crystal face 004 of crystalline carbon in the powder sample, and I₁₁₀ is the integrated area of the diffraction peak of the crystal face 110 of crystalline carbon in the powder sample. In the X-ray diffraction analysis test of the present application, a copper target can be used as an anode target, and CuKα rays are used as a radiation source, with a ray wavelength λ = 1.5418Å, a scanning 2θ angle range of 20°-80°, and a scanning rate of 4°/min.

In the present application, the primary particle and the secondary particle both have the meanings that are well-known in the art. The primary particle refers to a non-agglomerated particle. The secondary particle refers to a particle in an agglomerated state formed by the aggregation of two or more primary particles. The primary particle and the secondary particle can be easily distinguished by using a scanning electron microscope (SEM) image.

In the present application, the gram capacity of the material (e.g., the first carbon-based material, the second carbon-based material, the third carbon-based material, etc.) has a well-known meaning in the art, and can be measured by methods known in the art. An exemplary measurement method is as follows: a sample powder, a conductive agent of carbon black (Super P) and a binder of polyvinylidene fluoride (PVDF) at a mass ratio of 91.6 : 1.8 : 6.6 are uniformly mixed with a solvent of N-methyl pyrrolidone (NMP) to prepare a slurry; and the prepared slurry is coated on the surface of a negative electrode current collector of a copper foil, and dried in an oven for later use; ethylene carbonate (EC), ethyl methyl carbonate (EMC), and diethyl carbonate (DEC) at a volume ratio of 1 : 1 : 1 are mixed to obtain an organic solvent, and then LiPF₆ is dissolved in the organic solvent to prepare an electrolyte solution at a concentration of 1 mol/L; and then a metal lithium plate is used as a counter electrode, and a polyethylene (PE) film is used as a separator, and the two are assembled with the above electrolyte solution in a glove box protected by argon gas to form a CR2430 button battery. The obtained button cell is allowed to stand for 12 h, then discharged to 0.005 V with a constant current at 0.05C at 25°C, allowed to stand for 10 min, then discharged to 0.005 V with a constant current at a current of 50 µA, allowed to stand for 10 min, and then discharged to 0.005 V with a constant current at 10 µA; and the button battery is charged to 2 V with a constant current at 0.1C, and the charge capacity is recorded. The ratio of the charging capacity to the mass of the sample is the gram capacity of a corresponding material (e.g., the first carbon-based material, the second carbon-based material, etc.).

In the present application, the areal density of the negative electrode film layer has a well-known meaning in the art and can be measured using a method known in the art. For example, a negative electrode plate that is coated on one side and cold pressed (if it is coated on both sides, the negative electrode film layer on one side can be wiped away first) can be taken and punched into a small wafer with an area of S₁, and the small wafer is weighted and the weight thereof is recorded as M₁. Then the negative electrode film layer of the weighed negative electrode plate is wiped off, and the negative electrode current collector is weighed and the weight thereof is marked as M₀. Areal density of negative electrode plate = (M₁-M₀)/S₁.

In the present application, the compacted density of the negative electrode film layer has a well-known meaning in the art and can be measured using a method known in the art. Compacted density of negative electrode film layer = areal density of negative electrode film layer/thickness of negative electrode film layer. The thickness of the negative electrode film layer has a well-known meaning in the art and can be measured using a method known in the art, for example using a ten-thousandth micrometer (e.g., Mitutoyo293-100 type, with an accuracy of 0.1 µm).

In the present application, the porosity of the negative electrode film layer has a well-known meaning in the art and can be measured using a method known in the art. An exemplary measurement method is as follows: a negative electrode plate that is coated on one side and cold pressed (if it is coated on both sides, the negative electrode film layer on one side can be wiped away first) is taken and punched into a small wafer sample with a certain area, and the apparent volume V₁ of the negative electrode plate is calculated; and the true volume V₂ of the negative electrode plate is measured by using an inert gas (such as helium or nitrogen) as a medium and a true density tester by means of a gas displacement method with reference to GB/T24586-2009. Porosity of negative electrode film layer = (V₁-V₂)/V₁ × 100%. A plurality of (e.g. 30) negative electrode plate samples with good appearance and no powder falling on the edge can be taken for testing, and the results are averaged to improve the accuracy of the test results. The test instrument may be a Micromeritics AccuPyc II 1340 true density tester.

In the present application, the OI value of the negative electrode film layer has a well-known meaning in the art and can be measured by instruments and methods known in the art. For example, the OI value may be measured by an X-ray diffractometer (such as Bruker D8 Discover). The test can be done with reference to JIS K 0131-1996 and JB/T 4220-2011, the X- ray diffraction pattern of the negative electrode plate is obtained, and then the OI value of the negative electrode film layer is calculated according to OI value = I₀₀₄/I₁₁₀. I₀₀₄ is the integrated area of the diffraction peak of the crystal face 004 of crystalline carbon in the negative electrode film layer, and I₁₁₀ is the integrated area of the diffraction peak of the crystal face 110 of crystalline carbon in the negative electrode film layer. In the X-ray diffraction analysis test of the present application, a copper target can be used as an anode target, and CuKα rays are used as a radiation source, with a ray wavelength λ = 1.5418Å, a scanning 20 angle range of 20°-80°, and a scanning rate of 4°/min.

Notably, the above-mentioned tests for various parameters of the first active material, the second active material, or the negative electrode film layer can be carried out by sampling from a secondary battery prepared according to the following steps.

The secondary battery is discharged (for safety, the secondary battery is generally in a full-discharged state); the secondary battery is disassembled, and the negative electrode plate is taken out and soaked in dimethyl carbonate for a certain time period (e.g., 2 h - 10 h); and the negative electrode plate is then taken out and dried at a certain temperature for a certain time period (e.g., 60°C, 4 h or more), and then, the dried negative electrode plate is taken out. At this time, the negative electrode film layer can be sampled from the dried negative electrode plate and tested to obtain the above relevant parameters, such as the areal density, compacted density, porosity and OI value of the negative electrode film layer.

The dried negative electrode plate above is baked at a certain temperature for a certain time period (e.g., 400°C, 2 h or more), and a second active material is sampled first from any area of the baked negative electrode plate (a blade may be used to scrape powder for sampling), with the sampling position being the second area of the negative electrode film layer; a first active material is then sampled in the same manner, and the sampling position is the first area of the negative electrode film layer; and the collected first active material and second active material are respectively sieved (for example, with a 200-mesh sieve), and finally the samples of the first active material and the second active material that can be used for measuring the above material parameters of the present application are obtained.

### [Method for preparing the negative electrode plate]

The present application further provides a method for preparing a negative electrode plate of the present application. The method comprises the following steps: providing a first slurry comprising a first active material and a second slurry comprising a second active material; coating the first slurry on a negative electrode current collector, and coating the second slurry on the first slurry, followed by drying and cold pressing, to obtain a negative electrode plate.

In some embodiments, the first active material, and an optional conductive agent, an optional binder and other optional auxiliary agents may be dispersed in a solvent (such as deionized water) to form the first slurry.

In some embodiments, the second active material, and an optional conductive agent, an optional binder and other optional auxiliary agents may be dispersed in a solvent (such as deionized water) to form the second slurry.

In some embodiments, the first active material comprises a first carbon-based material, or a mixture of a first carbon-based material and a third carbon-based material.

In some embodiments, the second active material comprises a second carbon-based material.

In some embodiments, the first slurry and/or the second slurry further comprises a silicon-based material.

The first slurry and the second slurry may be coated simultaneously or respectively. In some embodiments, the first slurry and the second slurry are coated simultaneously. Simultaneous coating can reduce the resistance of the negative electrode film layer, thereby further improving the dynamic performance and cycling performance of the secondary battery.

The coating weight of the first slurry and the second slurry can be adjusted according to actual situation.

In the present application, the above-mentioned first active material, the second active material, etc., are commercially available, or prepared by the following method of the present application.

In some embodiments, a method for preparing the first carbon-based material comprises: step 1, providing a raw material with a plurality of pore structures; step 2, uniformly mixing the raw material with a filling material at a preset ratio, and then keeping the mixture at a first temperature T₁ for a first time t₁, and finally cooling the mixture to room temperature to obtain an intermediate; and step 3, keeping the obtained intermediate at a second temperature T₂ for a second time t₂, and finally obtaining a first carbon-based material.

In some embodiments, in step 1, the raw material for preparing the first carbon-based material comprises natural graphite. Optionally, the natural graphite comprises one or more of crystalline flake graphite, natural spherical graphite, and microcrystalline graphite, and more optionally, the natural spherical graphite.

"Natural spherical graphite" means the natural graphite having a spherical shape or a spheroidal shape. Besides, not all natural graphite particles are controlled to be ideal spheres. In some embodiments, the crystalline flake graphite may be pretreated to obtain natural spherical graphite of desired particle size and morphology. Optionally, the pretreatment comprises crushing, classifying, spheroidizing, purifying, etc.

In some embodiments, in step 1, the graphitization degree of the raw material is ≥ 96%, which is beneficial to adjusting the graphitization degree of the first carbon-based material.

In some embodiments, in step 1, the volume distribution particle size Dv50 of the raw material may be 10.0 µm - 30.0 µm, optionally 12.0 µm - 20.0 µm, which is beneficial to preparing the first carbon-based material with a desired volume distribution particle size.

In some embodiments, in step 1, the specific surface area of the raw material may be ≥ 2.5 m²/g, optionally 2.5 m²/g - 10.0 m²/g. When the specific surface area of the raw material is within the ranges above, it is beneficial to carrying out subsequent filling processing and obtaining the first carbon-based material with a desired specific surface area, and it is also beneficial for the first carbon-based material to have both a high capacity and high first coulombic efficiency. In addition, it is also beneficial for the first carbon-based material to have better dynamic performance.

In some embodiments, in step 2, the softening point temperature of the filling material is 95°C - 180°C; and optionally, the softening point temperature of the filling material is 105°C - 170°C, 105°C - 160°C, 105°C - 155°C, 105°C - 150°C, 110°C - 165°C, 110°C - 160°C, 115°C - 160°C, or 115°C - 150°C.

In some embodiments, in step 2, the coking value of the filling material is 20% - 50%, optionally 30% - 42%. In the present application, the coking value of the filling material has a meaning well-known in the art and can be measured by instruments and methods known in the art. For example, the coking value of the filling material can be measured with reference to GB/T 8727-2008.

In some embodiments, in step 2, the volume distribution particle size Dv50 of the filling material is less than or equal to 6 µm, optionally 1 µm - 6 µm, 1 µm - 5 µm, 2 µm - 5 µm, and 3 µm - 5 µm. This facilitates the filling of the filling material that has been melted by heat into the pore structures of the raw material and is also beneficial to improving the dispersion uniformity of the filling material in the raw material.

In some embodiments, in step 2, the filling material comprises one or more of coal tar pitch, petroleum pitch, polymer compounds and resins, optionally one or both of coal tar pitch and petroleum pitch.

In some embodiments, in step 2, a mass ratio of the filling material to the raw material is (10-40) : 100, optionally (10-35) : 100, (10-30) : 100, (10-25) : 100, (10-20) : 100, (12-30) : 100, (12-25) : 100, (14-28) : 100, and (15-25) : 100.

In step 2, by adjusting one or more parameters such as the type, softening point, coking value, and addition amount of the filling material to be within the ranges above, it is beneficial to adjusting the number and/or size of the pores in the outer area and the inner area of the first carbon-based material to be within a suitable range, which is beneficial to adjusting the S₂/S₁ of the first carbon-based material to be within a suitable range.

By adjusting parameters such as the type, softening point, coking value, and addition amount of the filling material to be within the ranges above, the filling material that has been melted by heat has a not high viscosity and maintains good fluidity and is less prone to adhere to the raw material particles at the same time, which can reduce the agglomeration of the raw material particles in a subsequent preparation process; therefore, problems of increased surface defects, increased surface active sites, etc., of the first carbon-based material particles due to the need of adding a depolymerization process can also be avoided.

In some embodiments, in step 2, a heating process, in which the raw material and the filling material are mixed uniformly at a preset ratio and then heated to a first temperature T₁, is a staged heating process.

In some embodiments, the staged heating process comprises a first heating process, a second heating process and a third heating process.

In some embodiments, the first heating process comprises heating to 200°C - 250°C and holding for 0.5 h - 3 h.

In some embodiments, the second heating process comprises heating to 450°C - 550°C and holding for 0 h - 2 h. When the holding time is 0 h, it means that when the temperature is raised to the range of 450°C-550°C, the temperature is continuously raised to the first temperature T₁ without a holding process. In some embodiments, the third heating process comprises heating to the first temperature T₁ and holding for the first time t₁.

In the staged heating process, the temperature is first raised to 200°C - 250°C. Since the heating temperature is higher than the softening point temperature of the filling material, the filling material is melted by the heat and softened at this time, and it can be allowed to flow and filled into the pore structures of the raw material with the temperature being held for 0.5 h-3 h; then the temperature is raised to 450°C-550°C, and at this time, the melted and softened filling material is subjected to a carbonization reaction, gradually reaching a semi-coke state and turning into a viscous liquid or solid, such that the filling material is prevented from entering all the pore structures of the raw material; and finally, the temperature is raised to the first temperature, and at this time, the filling material is subjected to a carbonization reaction, such that the pore structure occupied by the filling material can be effectively filled.

In some embodiments, in step 2, the first temperature T₁ is reached at a rate of 1°C/min-10°C/min. For example, the heating rate may be a range consisting of any value of 1°C/min, 2°C/min, 3°C/min, 4°C/min, 5°C/min, 6°C/min, 7°C/min, 8°C/min, 9°C/min, 10°C/min or more. Optionally, the heating rate is 1.5°C/min - 8°C/min, 1.5°C/min - 6°C/min, 2°C/min - 6°C/min, and 2°C/min - 5°C/min.

In some embodiments, the heating rate of the first heating process may be 1°C/min - 10°C/min, optionally 1.5°C/min - 8°C/min, 1.5°C/min - 6°C/min, 2°C/min - 6°C/min, and 2°C/min - 5°C/min.

In some embodiments, the heating rate of the second heating process may be 1°C/min - 10°C/min, optionally 2°C/min - 8°C/min.

In some embodiments, the heating rate of the third heating process may be 1°C/min - 10°C/min, optionally 2°C/min - 8°C/min.

In some embodiments, in step 2, the first temperature T₁ is 700°C - 1200°C. For example, the first temperature T₁ may be 700°C, 750°C, 800°C, 850°C, 900°C, 950°C, 1000°C, 1050°C, 1100°C, 1200°C or in a range consisting of any of the above values. Optionally, the first temperature T₁ is 750°C - 1100°C, 800°C - 1100°C, 850°C - 1100°C, 900°C - 1100°C, and 850°C - 1000°C.

In some embodiments, in step 2, the first time t₁ is 1 h - 5 h. For example, the first time t₁ may be 1 h, 1.5 h, 2 h, 2.5 h, 3 h, 3.5 h, 4 h, 4.5 h, 5 h or in a range consisting of any of the above values. Optionally, the first time t₁ is 2 h-4 h.

In some embodiments, in step 2, the heat treatment can be carried out in a medium frequency furnace, a roller kiln, a rotary kiln, a pushed slab kiln, a vertical granulation kettle, a horizontal granulation kettle, a vertical reaction kettle, a horizontal reaction kettle or a rotary drum furnace, etc., which can perform programmed heating.

In some embodiments, in step 2, a heat treatment atmosphere may be a protective gas atmosphere. The protective gas may include one or more of nitrogen, argon, and helium.

In step 2, by adjusting one or more of the heating rate, the first temperature, the first time, the heating process, etc., to be within the ranges above, it is beneficial to adjusting the number and/or size of the pores in the outer area and the inner area of the first carbon-based material to be within a suitable range, which is beneficial to adjusting the S₂/S₁ of the first carbon-based material to be within a suitable range.

In some embodiments, in step 3, the second temperature T₂ is 1800°C - 2600°C. Optionally, the second temperature T₂ is 1850°C - 2500°C, 1900°C - 2450°C, 1950°C - 2450°C, and 2000°C - 2400°C.

In some embodiments, in step 3, the second time t₂ is 1.5 h - 6 h. For example, the second time t₁ may be a range consisting of any value of 2 h, 2.5 h, 3 h, 3.5 h, 4 h, 4.5 h, 5 h, 5.5 h, 6 h or more. Optionally, the second time t₂ is 2 h - 5 h.

In some embodiments, in step 3, the heat treatment may be carried out in an intermediate-frequency furnace, a box-type graphitization furnace, an Acheson graphitization furnace, a continuous graphitization furnace, or a length wise graphitization furnace.

In some embodiments, in step 3, a continuous graphitization heat treatment atmosphere may be a protective gas atmosphere. The protective gas may include one or more of nitrogen, argon, and helium.

In step 3, by adjusting one or two of the second temperature and the second time to be within the ranges above, it is beneficial to adjusting the content of disordered carbon in the first carbon-based material to be within a suitable range, which is beneficial for the first carbon-based material to have a suitable graphitization degree, interlayer spacing, etc.

In the preparation method of the first carbon-based material, by adjusting one or more of the parameters of natural graphite, the parameters of the filling material, the heating rate, the first temperature, the first time, the heating process, the second temperature, the second time, etc., to be within the ranges above, it is beneficial to adjusting the parameters such as S₂/S₁, graphitization degree, gram capacity, powder OI value, specific surface area, particle size, powder compacted density, and tap density of the first carbon-based material.

### [Positive electrode plate]

In some embodiments, the positive electrode plate comprises a positive current collector and a positive film layer arranged on at least one surface of the positive current collector. For example, the positive electrode current collector has two opposite surfaces in the thickness direction thereof and the positive electrode film layer is arranged on either or both of the two opposite surfaces of the positive electrode current collector.

The positive electrode current collector may be a metal foil or a composite current collector. As an example of the metal foil, an aluminum foil may be used. The composite current collector may comprise a polymer material base layer and a metal material layer formed on at least one surface of the polymer material base layer. As an example, the metal material may include one or more of aluminum, an aluminum alloy, nickel, a nickel alloy, titanium, a titanium alloy, silver, and a silver alloy. As an example, the polymer material base layer may include one or more of polypropylene (PP), polyethylene terephthalate (PET), polybutylene terephthalate (PBT), polystyrene (PS), and polystyrene ethylene (PE).

The positive electrode film layer typically comprises a positive electrode active material, an optional binder and an optional conductive agent. The positive electrode film layer is usually formed by applying a positive electrode slurry to a positive electrode current collector, and drying and cold-pressing same. The positive electrode slurry is usually formed by dispersing the positive electrode active material, an optional conductive agent, an optional binder, and any other components in a solvent, and uniformly stirring same. The solvent may be N-methylpyrrolidone (NMP), but is not limited thereto. As an example, the binder for the positive electrode film layer may include one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin. As an example, the conductive agent for the positive electrode film layer may include one or more of superconductive carbon, conductive graphite, acetylene black, carbon black, Ketjen black, carbon dots, carbon nanotubes, graphene, and carbon nanofibers.

The positive electrode active material may be a positive electrode active material for secondary batteries well-known in the art.

When the secondary battery of the present application is a lithium-ion battery, the positive electrode active material may include, but is not limited to one or more of a lithium-containing transition metal oxide, a lithium-containing phosphate, and a respective modified compound thereof. Examples of the lithium-containing transition metal oxide may include, but are not limited to, one or more of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and a respective modified compound thereof. An example of the lithium-containing phosphate may include, but is not limited to, one or more of lithium iron phosphate, a lithium iron phosphate-carbon composite, lithium manganese phosphate, a lithium manganese phosphate-carbon composite, lithium iron manganese phosphate, a lithium iron manganese phosphate-carbon composite, and a respective modified compound thereof.

In some embodiments, in order to further improve the energy density of the secondary battery, the positive electrode active material for a lithium-ion battery may comprise one or more of the lithium transition metal oxide represented by a general formula of LiₐNi_{b}Co_{c}M_{d}OₑA_{f}, and a respective modified compound thereof. 0.8 ≤ a ≤ 1.2, 0.5 ≤ b < 1, 0 < c< 1, 0< d< 1, 1 ≤ e ≤ 2, and 0 ≤ f ≤ 1, M is selected from one or more of Mn, Al, Zr, Zn, Cu, Cr, Mg, Fe, V, Ti and B, and A is selected from one or more of N, F, S and Cl.

In some embodiments, as an example, the positive electrode active material for the lithium-ion battery may include one or more of LiCoO₂, LiNiO₂, LiMnO₂, LiMn₂O₄, LiNi_{1/3}Co_{1/3}Mn_{1/3}O₂ (NCM333), LiNi_{0.5}CO_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄ and LiMnPO₄.

In the present application, the modified compound of each positive electrode active material may be obtained by the doping modification and/or surface coating modification of the positive electrode active material.

### [Electrolyte]

In some embodiments, an electrolyte solution is used as the electrolyte and comprises an electrolyte salt and a solvent.

The type of the electrolyte salt is not specifically limited and may be selected according to actual requirements.

When the secondary battery of the present application is a lithium-ion battery, as an example, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluorooxalate borate (LiDFOB), lithium dioxalate borate (LiBOB), lithium difluorophosphate (LiPO₂F₂), lithium bisoxalatodifluorophosphate (LiDFOP) and lithium tetrafluorooxalate phosphate (LiTFOP).

The type of the solvent is not specifically limited and may be selected according to actual requirements. In some embodiments, as an example, the solvent may comprise one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS) and diethyl sulfone (ESE).

In some embodiments, the electrolyte solution may further optionally comprise an additive. For example, the additive may comprise a negative electrode film-forming additive, or may also comprise a positive electrode film-forming additive, or may also comprise an additive that may improve certain performances of a secondary battery, such as an additive that improves the overcharge performance of a secondary battery, an additive that improves the high-temperature performance of a secondary battery, and an additive that improves the low-temperature power performance of a secondary battery.

### [Separator]

The type of the separator is not particularly limited in the present application, and any well-known porous-structured separator with good chemical stability and mechanical stability may be selected.

In some embodiments, the material of the separator may include one or more of glass fibers, a non-woven, polyethylene, polypropylene, and polyvinylidene fluoride. The separator may be either a single-layer film or a multi-layer composite film. When the separator is a multi-layer composite film, the materials of the respective layers are the same or different.

In some embodiments, the positive electrode plate, the separator, and the negative electrode plate may be formed into an electrode assembly by a winding process or a stacking process.

In some embodiments, the secondary battery may comprise an outer package. The outer package may be used to encapsulate the electrode assembly and electrolyte.

In some embodiments, the outer package can be a hard housing, for example, a hard plastic housing, an aluminum housing, a steel housing, etc. The outer package may also be a soft bag, such as a pouch-type soft bag. The material of the soft bag may be plastics, such as one or more of polypropylene (PP), polybutylene terephthalate (PBT), and polybutylene succinate (PBS).

The shape of the secondary battery is not particularly limited in the present application and may be cylindrical, square or of any other shape. Fig. 5 shows a secondary battery 5 with a square structure as an example.

In some embodiments, as shown in Fig. 6, the outer package may comprise a housing 51 and a cover plate 53. The housing 51 may comprise a bottom plate and side plates connected to the bottom plate, and the bottom plate and the side plates are enclosed to form an accommodating cavity. The housing 51 has an opening in communication with the accommodating cavity, and the cover plate 53 is used for covering the opening to close the accommodating cavity. The positive electrode plate, the negative electrode plate, and the separator may be subjected to a winding process or a laminating process to form an electrode assembly 52. The electrode assembly 52 is packaged in the accommodating cavity. An electrolyte solution is infiltrated into the electrode assembly 52. The number of the electrode assemblies 52 contained in the secondary battery 5 may be one or more and may be adjusted according to requirements.

The method for preparing the secondary battery of the present application is well-known. **In** some embodiments, the positive electrode plate, the separator, the negative electrode plate, and the electrolyte solution may be assembled to form a secondary battery. As an example, the positive electrode plate, the separator, and the negative electrode plate may be formed into an electrode assembly by a winding process or a stacking process, the electrode assembly is placed in an outer package and dried, an electrolyte solution is injected, and the electrode assembly is subjected to procedures such as vacuum packaging, standing, forming, and shaping to obtain a secondary battery.

In some examples of the present application, the secondary battery according to the present application may be assembled into a battery module, the number of the secondary batteries contained in the battery module may be multiple, and the specific number may be adjusted according to the application and capacity of the battery module.

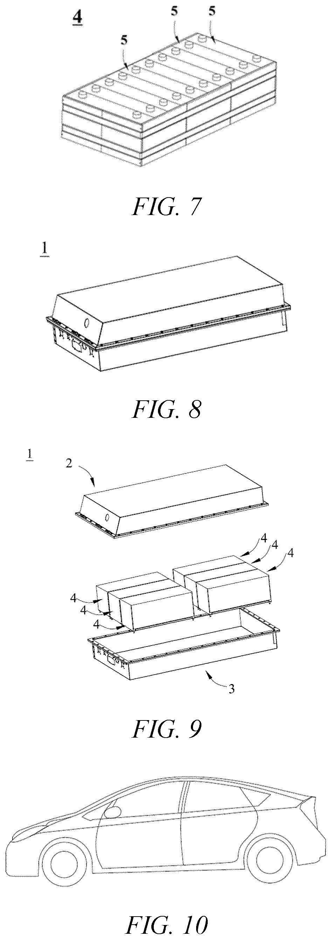

Fig. 7 shows a schematic diagram of a battery module 4 as an example. As shown in Fig. 7, in the battery module 4, a plurality of secondary batteries 5 may be arranged in sequence along the length direction of the battery module 4. Apparently, the secondary batteries may also be arranged in any other manner. Furthermore, the plurality of secondary batteries 5 may be fixed by fasteners.

Optionally, the battery module 4 may further comprise an outer housing with an accommodating space, and the plurality of secondary batteries 5 are accommodated in the accommodating space.

In some embodiments, the above battery module may further be assembled into a battery pack, and the number of the battery modules contained in the battery pack may be adjusted according to the application and capacity of the battery pack.

Figs. 8 and 9 show a schematic diagram of a battery pack 1 as an example. As shown in Figs. 8 and 9, the battery pack 1 may comprise a battery case and a plurality of battery modules 4 arranged in the battery box. The battery box comprises an upper box body 2 and a lower box body 3, and the upper box body 2 is used to cover the lower box body 3 to form a closed space for accommodating the battery modules 4. The plurality of the battery modules 4 may be arranged in the battery box in any manner.

The present application further provides a power consuming device comprising at least one of a secondary battery, a battery module, or a battery pack of the present application. The secondary battery, the battery module or the battery pack may be used as a power supply of the power consuming device or as an energy storage unit of the power consuming device. The power consuming device may be, but is not limited to, a mobile device (e.g., a mobile phone, a tablet computer, and a laptop computer), an electric vehicle (e.g., a pure electric vehicle, a hybrid electric vehicle, a plug-in hybrid electric vehicle, an electric bicycle, an electric scooter, an electric golf cart, and an electric truck), an electric train, a ship and a satellite, an energy storage system, etc.

A secondary battery, battery module or battery pack may be used for the power consuming device according to the usage requirements thereof.

Fig. 10 shows a schematic diagram of a power consuming device as an example. The power consuming device may be a pure electric vehicle, a hybrid electric vehicle, a plug-in hybrid electric vehicle, etc. In order to meet the requirements of the power consuming device for a high power and a high energy density, a battery pack or battery module may be used.

As another example, the power consuming device may be a mobile phone, a tablet computer, a laptop computer, etc. The power consuming device is generally required to be thin and light, and may have a secondary battery used as a power supply.

### Examples

The following examples more specifically describe the content disclosed in the present application, and these examples are only used for explanatory description, because various modifications and transitions within the scope of the present disclosure are obvious to those skilled in the art. Unless otherwise stated, all the parts, percentages, and ratios reported in the following examples are on a mass basis, and all the reagents used in the examples are commercially available, obtained by synthesis through a conventional method, and used directly without further treatment, and the instruments used in the examples are commercially available.

In the following examples, the first carbon-based material used can be prepared by the following method of the present application.

### (1) Preparation of first carbon-based material:

A flake graphite is mechanically crushed, classified, spheroidized and purified to obtain a natural spherical graphite. The obtained natural spherical graphite is mixed with petroleum asphalt, and then the mixed material is placed in a device which can perform programmed heating and subjected to heat treatment by staged heating, and finally cooled to room temperature to obtain an intermediate. The obtained intermediate is placed in a graphitization furnace for heat treatment, and finally demagnetized and sieved to obtain the first carbon-based material. The above process can be adjusted according to the preparation process of the first carbon-based material given in the foregoing description of the present application, such that the parameters such as S₂/S₁, volume distribution particle size Dv50 and specific surface area of the first carbon-based material are within a suitable range.

S₂/S₁ of the first carbon-based material is measured by the following method. A binder for sample preparation and the first carbon-based material powder are uniformly mixed, and the mixture is coated onto a copper foil and dried at 60°C for 30 min for later use. The sample is cut into a size of 6 mm × 6 mm and adhered to a sample table of a CP argon ion cross-section polisher. The sample is cut by a plasma beam to obtain a cross section of the first carbon-based material, wherein the cross section of the first carbon-based material passes through the center of the first carbon-based material particle. The test instrument may be an IB-09010 CP argon ion cross-section polisher from the JEOL corporation, Japan. The cross section of the first carbon-based material is scanned using a scanning electron microscope. Reference can be made to JY/T010-1996 for the test. The test instrument may be a Sigma 300 scanning electron microscope, ZEISS, Germany. An area extending from the surface of the particle of the first carbon-based material to the inside of the particle by a distance of 0.25 L is designated as an outer area, an area inside the outer area is designated as an inner area, and L represents the short axis length of the particle of the first carbon-based material. The total pore area S₁ of the outer area of the first carbon-based material and the total pore area S₂ of the inner area of the first carbon-based material are calculated using an image processing software. The image processing software may be AVIZO.

In the following embodiments, the second carbon-based material used is commercially available, and the surface of the second carbon-based material does not have a carbon coating layer.

**The secondary batteries of examples 1-32 were prepared according to the following method.**

The first carbon-based material (see Table 1 for details), a conductive agent of carbon black (Super P), a thickener of sodium carboxymethylcellulose and a binder of a styrene-butadiene rubber were fully stirred and mixed at a weight ratio of 96.4 : 1 : 1.2 : 1.4 in an appropriate amount of a solvent of deionized water to form a first slurry. The second carbon-based material (see Table 1 for details), a conductive agent of carbon black (Super P), a thickener of sodium carboxymethylcellulose and a binder of a styrene-butadiene rubber were fully stirred and mixed at a weight ratio of 96.4 : 1 : 1.2 : 1.4 in an appropriate amount of a solvent of deionized water to form a second slurry. The first slurry and the second slurry were simultaneously extruded by a double-chamber coating device. The first slurry was coated on a negative electrode current collector of a copper foil, and the second slurry was coated on the first slurry, followed by drying and cold pressing to obtain a negative electrode plate. The coating weights of the first slurry and the second slurry were the same.

Lithium iron phosphate, a conductive agent of carbon black (Super P) and a binder of polyvinylidene fluoride were mixed at a weight ratio of 96 : 2 : 2, and an appropriate amount of a solvent NMP was added and stirred uniformly to obtain a positive electrode slurry. The positive electrode slurry was coated onto two surfaces of a positive electrode current collector of an aluminum foil, followed by drying and cold pressing, to obtain a positive electrode plate.

Ethylene carbonate (EC), ethyl methyl carbonate (EMC), and diethyl carbonate (DEC) at a volume ratio of 1 : 1 : 1 were mixed to obtain an organic solvent, and then LiPF₆ was dissolved in the organic solvent to prepare an electrolyte solution at a concentration of 1 mol/L.

A polyethylene film was used as a separator, the separator, and the positive electrode plate and the negative electrode plate prepared above were placed in sequence, such that the separator was located between the positive electrode plate and the negative electrode plate to play a role of separation, followed by winding to obtain an electrode assembly; and the electrode assembly was placed in an outer package and dried, and the electrolyte solution was injected, followed by procedures such as vacuum packaging, standing, forming and shaping to obtain a secondary battery.

### Comparative example 1

The secondary battery of comparative example 1 was prepared by a method similar to that of Example 1, except that the first slurry and the second slurry were coated at different positions, the second slurry was coated on a negative electrode current collector of a copper foil, and the first slurry was coated on the second slurry.

### Performance test

### (1) Test of fast-charging performance of secondary battery

At 25°C, the secondary batteries were charged to 3.65 V at a constant current of 0.33 C, then charged to a current of 0.05 C at a constant voltage, left to stand for 5 min and then discharged to 2.5 V at a constant current of 0.33 C; and the actual capacity thereof was recorded as C0.

Then, the secondary batteries were charged to 3.65 V or a negative electrode cut-off potential of 0 V (whichever comes first) at constant currents of 1.0 C0, 1.3 C0, 1.5 C0, 1.8 C0, 2.0 C0, 2.3 C0, 2.5 C0 and 3.0 C0 in sequence. After each charging was completed, the batteries should be discharged at 1 C0 to 2.5 V, and the corresponding negative electrode potentials were recorded when the batteries were charged to 10%, 20%, 30%, ..., and 80% SOC (State of Charge) at different charge rates. The charge rate - negative electrode potential curves in different SOC states were plotted, followed by linear fitting to obtain the corresponding charge rates when the negative electrode potentials were 0 V in different SOC states, and the charge rates at this time were the charging windows in the SOC states, denoted as C10%SOC, C20%SOC, C30%SOC, C40%SOC, C50%SOC, C60%SOC, C70%SOC and C80%SOC respectively; and the charging time T (in min) for charging the secondary batteries from 10% SOC to 80% SOC was calculated according to the formula (60/C20%SOC + 60/C30%SOC + 60/C40%SOC + 60/C50%SOC + 60/C60%SOC + 60/C70%SOC + 60/C80%SOC ) × 10%, provided that lithium does not precipitate from the secondary battery. The shorter the charging time, the better the dynamic performance of the secondary battery.

### (2) Test for cycling performance of secondary battery

At 45°C, the secondary batteries prepared above were charged to 3.65 V at a constant current of 1 C, then charged to a current of 0.05 C at a constant voltage, left to stand for 5 min and then discharged to 2.5 V at a constant current of 1 C; and the discharge capacity at this time was recorded, which was the initial discharge capacity. According to the above method, the secondary batteries were subjected to the charge/discharge cycling test, and the discharge capacity after each cycle was recorded, the test was stopped until the discharge capacity of the secondary batteries after cycling was attenuated to 80% of the initial discharge capacity, and the number of cycles of the secondary batteries were recorded.

### (3) Test of storage performance of secondary battery

At 25°C, the secondary batteries prepared above were charged to 3.65 V at a constant current of 1 C, then charged to a current of 0.05 C at a constant voltage, left to stand for 5 min and then discharged to 2.5 V at a constant current of 1 C; and the discharge capacity at this time was recorded, which was the capacity before storage.

At 25°C, the secondary batteries prepared above were charged to 3.65 V at a constant current of 1 C, and then charged to a current of 0.05 C at a constant voltage. Thereafter, the secondary batteries were stored in a thermotank at 60°C. The test was stopped until the discharge capacity of the secondary batteries after storage was attenuated to 80% of the discharge capacity before storage of the secondary batteries, and the storage days of the secondary batteries were recorded.

### (4) Test of thickness expansion rate of negative electrode film layer

At 25°C, the secondary batteries were charged to 3.65 V at a constant current of 0.33 C, then charged to a current of 0.05 C at a constant voltage, and left to stand for 10 min, and the negative electrode plate in 100% SOC state was taken to measure the average thickness of the negative electrode film layer, which was denoted as D₁. The thickness expansion rate of negative electrode film layer = (D₁-D₀)/D₀. D₀ represents the average thickness of the negative electrode film layer of the negative electrode plate after cold pressing.

The first carbon-based material of the present application has the advantages of a high capacity and a high compacted density. As can be seen from Tables 1 and 2, when the first area of the negative electrode film layer comprises the first carbon-based material with a pore structure of the present application, the secondary battery not only has a high energy density but also high safety performance, and good dynamic performance, cycling performance and storage performance.

In comparative example 1, with the first carbon-based material with a pore structure being arranged in the second area of the negative electrode film layer, and the artificial graphite without a coating layer being arranged in the first area of the negative electrode film layer, the battery has poor dynamic performance and cycling performance.

It should be noted that the present application is not limited to the above embodiments. The above embodiments are exemplary only, and any embodiment that has substantially the same constitutions as the technical ideas and has the same effects within the scope of the technical solution of the present application is encompassed within the technical scope of the present application. In addition, without departing from the scope of the subject matter of the present application, various modifications that are made to the embodiments and are conceivable to those skilled in the art, and other modes constructed by combining some of the constituent elements of the embodiments are also encompassed within the scope of the present application.

**Table 1**

| No. | First area of negative electrode film layer | | | | Second area of negative electrode film layer | | | | Thick ness expan sion rate of negati ve electr ode film layer | Charg ing time of batter y T (min) | Nu mbe r of cycl es of batt ery at 45° C | Days of storage of battery at 60°C |
|---|---|---|---|---|---|---|---|---|---|---|---|---|
| | First carbon-based material | | | | Second carbon-based material | | | | | | | |
| | Morphol ogy | S₂/S 1 | Spe cifi c surf ace area (m³/ g) | Dv5 0 (µm ) | Num ber perce ntage of secon dary partic les | Dv5 0 (µm ) | Speci fic surfac e area (m³/g ) | Gram capac ity (mAh /g) | | | | |
| Example 1 | Primary particle | 3.05 | 1 | 16 | 75% | 13 | 1.52 | 353 | 20.0 % | 30.1 | 200 1 | 399 |
| Example 2 | Primary particle | 1.50 | 1 | 16 | 75% | 13 | 1.52 | 353 | 20.5 % | 30.5 | 184 3 | 400 |
| Example 3 | Primary particle | 2.00 | 1 | 16 | 75% | 13 | 1.52 | 353 | 19.4 % | 30.1 | 189 3 | 401 |
| Example 4 | Primary particle | 450 | 1 | 16 | 75% | 13 | 1.52 | 353 | 18.0 % | 30.2 | 191 2 | 400 |
| Example 5 | Primary particle | 500 | 1 | 16 | 75% | 13 | 1.52 | 353 | 17.0 % | 29.8 | 182 9 | 398 |
| Example 6 | Primary particle | 1.10 | 1 | 16 | 75% | 13 | 1.52 | 353 | 21.5 % | 30.8 | 170 9 | 402 |
| Example 7 | Primary particle | 600 | 1 | 16 | 75% | 13 | 1.52 | 353 | 17.0 % | 30.0 | 172 4 | 401 |
| Example 8 | Primary particle | 3.05 | 0.5 | 30 | 75% | 13 | 1.52 | 353 | 20.2 % | 37.1 | 310 2 | 401 |
| Example 9 | Primary particle | 3.05 | 0.6 | 20 | 75% | 13 | 1.52 | 353 | 20.1 % | 34.5 | 299 5 | 399 |
| Example 10 | Primary particle | 3.05 | 0.8 | 18 | 75% | 13 | 1.52 | 353 | 20.1 % | 31.8 | 280 5 | 400 |
| Example 11 | Primary particle | 3.05 | 1.6 | 10 | 75% | 13 | 1.52 | 353 | 20.6 % | 29.4 | 189 1 | 401 |
| Example 12 | Primary particle | 3.05 | 2.4 | 8 | 75% | 13 | 1.52 | 353 | 21.3 % | 28.3 | 180 5 | 400 |
| Example 13 | Primary particle | 3.05 | 3 | 6 | 75% | 13 | 1.52 | 353 | 22.0 % | 27.9 | 169 4 | 401 |
| Example 14 | Primary particle | 3.05 | 1 | 16 | 50% | 13 | 1.52 | 353 | 21.1 % | 37.1 | 201 0 | 422 |
| Example 15 | Primary particle | 3.05 | 1 | 16 | 60% | 13 | 1.52 | 353 | 20.8 % | 35.7 | 200 2 | 421 |
| Example 16 | Primary particle | 3.05 | 1 | 16 | 70% | 13 | 1.52 | 353 | 20.3 % | 31.0 | 200 4 | 416 |
| Example 17 | Primary particle | 3.05 | 1 | 16 | 85% | 13 | 1.52 | 353 | 19.5 % | 29.9 | 200 1 | 398 |
| Example 18 | Primary particle | 3.05 | 1 | 16 | 90% | 13 | 1.52 | 353 | 19.0 % | 28.3 | 198 2 | 392 |
| Example 19 | Primary particle | 3.05 | 1 | 16 | 95% | 13 | 1.52 | 353 | 19.0 % | 28.6 | 197 0 | 392 |
| Example 20 | Primary particle | 3.05 | 1 | 16 | 75% | 25 | 0.80 | 353 | 22.2 % | 37.2 | 262 9 | 550 |
| Example 21 | Primary particle | 3.05 | 1 | 16 | 75% | 20 | 1.20 | 353 | 20.5 % | 35.5 | 248 9 | 550 |
| Example 22 | Primary particle | 3.05 | 1 | 16 | 75% | 15 | 1.40 | 353 | 20.1 % | 32.8 | 210 7 | 531 |
| Example 23 | Primary particle | 3.05 | 1 | 16 | 75% | 11 | 2.00 | 353 | 20.0 % | 28.0 | 193 3 | 392 |
| Example 24 | Primary particle | 3.05 | 1 | 16 | 75% | 9 | 3.00 | 353 | 19.8 % | 26.2 | 190 3 | 380 |
| Example 25 | Primary particle | 3.05 | 1 | 16 | 75% | 8 | 3.20 | 353 | 20.0 % | 24.4 | 179 4 | 375 |
| Example 26 | Primary particle | 3.05 | 1 | 16 | 75% | 13 | 1.52 | 335 | 22.4 % | 30.3 | 187 3 | 400 |
| Example 27 | Primary particle | 3.05 | 1 | 16 | 75% | 13 | 1.52 | 340 | 21.9 % | 30.6 | 189 9 | 401 |
| Example 28 | Primary particle | 3.05 | 1 | 16 | 75% | 13 | 1.52 | 345 | 21.4 % | 30.2 | 193 8 | 399 |
| Example 29 | Primary particle | 3.05 | 1 | 16 | 75% | 13 | 1.52 | 358 | 19.8 % | 30.5 | 205 9 | 400 |
| Example 30 | Primary particle | 3.05 | 1 | 16 | 75% | 13 | 1.52 | 360 | 19.7 % | 30.5 | 208 7 | 402 |
| Example 31 | Primary particle | 3.05 | 1 | 16 | 75% | 13 | 1.52 | 365 | 19.4 % | 31.7 | 209 2 | 399 |
| Example 32 | Secondar y particles | 3.05 | 1 | 16 | 75% | 13 | 1.52 | 353 | 18.3 % | 28.3 | 202 1 | 380 |

**Table 2**

| No. | Second area of negative electrode film layer | | | | First area of negative electrode film layer | | | | Thick ness expan sion rate of negati ve electr ode | Char ging time of batter y T (min) | Nu mbe r of cycl es of batt ery at 45° C | Days of storage of battery at 60°C |
|---|---|---|---|---|---|---|---|---|---|---|---|---|
| | Second carbon-based material | | | | First carbon-based material | | | | | | | |
| | Morp holog y | S₂/S 1 | Spe cifi c surf ace area (m³/ g) | Dv5 0 (µm ) | Num ber perce ntage of secon dary partic les | Dv5 0 (µm ) | Speci fic surfac e area (m³/g ) | gram capac ity (mAh /g) | | | | |
| Comparative example 1 | Prima ry partic le | 3.05 | 1.00 | 16 | 75% | 14.0 | 1.52 | 353.0 | 23.2 % | 38.5 | 167 3 | 356 |

## Claims

1. A secondary battery, comprising a negative electrode plate, wherein the negative electrode plate comprises a negative electrode current collector and a negative electrode film layer formed on at least one surface of the negative electrode current collector, the negative electrode film layer has a first surface away from the negative electrode current collector and a second surface opposite to the first surface, and the thickness of the negative electrode film layer is denoted as H; an area within a thickness range from the second surface of the negative electrode film layer to 0.3 H is denoted as a first area of the negative electrode film layer, and an area within a thickness range from the first surface of the negative electrode film layer to 0.3 H is denoted as a second area of the negative electrode film layer; the first area comprises a first active material, the first active material comprises a first carbon-based material, and the first carbon-based material has a pore structure; and the second area comprises a second active material, and the second active material comprises a second carbon-based material.

2. The secondary battery according to claim 1, wherein the tap density of the second carbon-based material is greater than that of the first carbon-based material.

3. The secondary battery according to either of claims 1-2, wherein the graphitization degree of the second carbon-based material is less than that of the first carbon-based material.

4. The secondary battery according to any one of claims 1-3, wherein the powder OI value of the second carbon-based material is less than that of the first carbon-based material.

5. The secondary battery according to any one of claims 1-4, wherein the gram capacity of the second carbon-based material is less than that of the first carbon-based material.

6. The secondary battery according to any one of claims 1-5, wherein the volume distribution particle size Dv50 of the second carbon-based material is less than that of the first carbon-based material.

7. The secondary battery according to any one of claims 1-6, wherein the specific surface area of the second carbon-based material is larger than that of the first carbon-based material.

8. The secondary battery according to any one of claims 1-7, wherein the powder compacted density of the second carbon-based material under a pressure of 50,000 N is less than that of the first carbon-based material under a pressure of 50,000 N.

9. The secondary battery according to any one of claims 1-8, wherein the X-ray diffraction pattern of the first carbon-based material does not have a diffraction peak of the crystal face 012 of a phase 3R.

10. The secondary battery according to any one of claims 1-9, wherein a X-ray diffraction pattern of the first carbon-based material has a diffraction peak of the crystal face 101 of the phase 3R, and optionally, the first carbon-based material satisfies 0 < I_{3R(101)}/I_{2H(004)} ≤ 0.100, wherein I_{3R(101)} is the peak intensity of a diffraction peak of the crystal face 101 of the phase 3R in a X-ray diffraction pattern of the first carbon-based material, and I_{2H(004)} is the peak intensity of a diffraction peak of the crystal face 004 of the phase 2H in a X-ray diffraction pattern of the first carbon-based material.

11. The secondary battery according to any one of claims 1-10, wherein the first carbon-based material comprises one or more pore structures having a pore area greater than or equal to 0.15 µm², optionally one or more pore structures having a pore area of 0.15 µm² - 2.0 µm².

12. The secondary battery according to any one of claims 1-11, wherein the first carbon-based material comprises an outer area and an inner area inside the outer area, wherein the outer area is an area extending from the surface of a particle of the first carbon-based material to the inside of the particle by a distance of 0.25 L, wherein L is the short axis length of the particle of the first carbon-based material; and the outer area has a total pore area denoted as S₁, the inner area has a total pore area denoted as S₂, and S₂ > S₁, optionally, 1.5 ≤ S₂/S₁ ≤ 500 and 2 ≤ S₂/S₁ ≤ 450.

13. The secondary battery according to claim 12, wherein
the area of the pore structures in the outer area of the first carbon-based material is less than or equal to 0.2 µm², optionally less than or equal to 0.1 µm²; and/or,
the inner area of the first carbon-based material comprises one or more pore structures having an area greater than or equal to 0.15 µm², optionally one or more pore structures having an area of 0.15 µm² - 2.0 µm².

14. The secondary battery according to any one of claims 1-13, wherein at least part of the surface of the first carbon-based material has a carbon coating layer.

15. The secondary battery according to any one of claims 1-14, wherein the first carbon-based material comprises primary particles, and optionally, the number percentage of the primary particles in the first carbon-based material is ≥ 70%.

16. The secondary battery according to any one of claims 1-15, wherein the mass percentage of the first carbon-based material in the first active material is ≥ 50 wt%, optionally 60 wt% - 100 wt%.

17. The secondary battery according to any one of claims 1-16, wherein the first carbon-based material satisfies at least one of:
(1) the specific surface area of the first carbon-based material is 0.6 m²/g - 2.4 m²/g, optionally 0.8 m²/g-1.6 m²/g;
(2) the volume distribution particle size Dv50 of the first carbon-based material is 8.0 µm - 30.0 µm, optionally 10.0 µm - 20.0 µm;
(3) the volume distribution particle size Dv90 of the first carbon-based material is 16.0 µm - 45.0 µm, optionally 17.0 µm - 42.0 µm;
(4) the (Dv90-Dv10)/Dv50 of the first carbon-based material is ≤ 1.55, optionally 0.90-1.50;
(5) the powder compacted density of the first carbon-based material under a pressure of 50,000 N is 1.80 g/cm³ - 2.10 g/cm³, optionally 1.85 g/cm³ - 2.05 g/cm³;
(6) the tap density of the first carbon-based material is 0.80 g/cm³ - 1.20 g/cm³, optionally 0.90 g/cm³ - 1.18 g/cm³;
(7) the graphitization degree of the first carbon-based material is 94% - 98%, optionally 95% - 97%;
(8) the powder OI value of the first carbon-based material is 10-35, optionally 13-30; and
(9) the gram capacity of the first carbon-based material is 355 mAh/g - 371 mAh/g, optionally 360 mAh/g - 370 mAh/g.

18. The secondary battery according to any one of claims 1-17, wherein the surface of the second carbon-based material does not have a carbon coating layer.

19. The secondary battery according to any one of claims 1-18, wherein the second carbon-based material comprises secondary particles; and optionally, the number percentage of the secondary particles in the second carbon-based material is ≥ 60%, optionally 60% - 90%.

20. The secondary battery according to any one of claims 1-19, wherein the second carbon-based material satisfies at least one of:
(1) the volume distribution particle size Dv50 of the second carbon-based material is 6 µm - 24 µm, optionally 9 µm - 13 µm;
(2) the specific surface area of the second carbon-based material is 1.2 m²/g - 3.0 m²/g, optionally 1.2 m²/g - 1.8 m²/g;
(3) the powder compacted density of the second carbon-based material under a pressure of 50,000 N is 1.6 g/cm³ - 1.95 g/cm³, optionally 1.65 g/cm³ - 1.85 g/cm³;
(4) the tap density of the second carbon-based material is 0.95 g/cm³ - 1.35 g/cm³, optionally 1.05 g/cm³ - 1.30 g/cm³;
(5) the graphitization degree of the second carbon-based material is ≥ 91.5%, optionally 91.5% - 95.4%;
(6) the powder OI value of the second carbon-based material is 2-5.5, optionally 2.5-5; and
(7) the gram capacity of the second carbon-based material is 340 mAh/g - 360 mAh/g, optionally 348 mAh/g - 356 mAh/g.

21. The secondary battery according to any one of claims 1-20, wherein the second carbon-based material comprises graphite; and optionally, the graphite comprises at least one of artificial graphite and natural graphite.

22. The secondary battery according to any one of claims 1-21, wherein the first active material further comprises a third carbon-based material, and the third carbon-based material comprises artificial graphite with a primary particle morphology.

23. The secondary battery according to claim 22, wherein the surface of the artificial graphite does not have a carbon coating layer.

24. The secondary battery according to claim 22 or 23, wherein the mass percentage of the third carbon-based material in the first active material is less than or equal to 50 wt%, optionally 20 wt% - 50 wt%.

25. The secondary battery according to any one of claims 22-24, wherein the third carbon-based material satisfies at least one of:
(1) the number percentage of the artificial graphite with a primary particle morphology in the third carbon-based material is ≥ 60%, optionally 70% - 95%;
(2) the graphitization degree of the third carbon-based material is 92.5% - 95.5%, optionally 92.7% - 95.5%;
(3) the powder OI value of the third carbon-based material is 4.5-11.5, optionally 4.5-11.0;
(4) the (Dv90-Dv10)/Dv50 of the third carbon-based material is ≤ 1.65, optionally 0.90-1.65;
(5) the volume distribution particle size Dv50 of the third carbon-based material is 12.0 µm - 22.0 µm, optionally 13.5 µm - 20.0 µm;
(6) the specific surface area of the third carbon-based material is 1.0 m²/g - 2.0 m²/g, optionally 1.05 m²/g - 1.95 m²/g;
(7) the tap density of the third carbon-based material is 0.95 g/cm³ - 1.25 g/cm³, optionally 1.00 g/cm³ - 1.25 g/cm³; and
(8) the gram capacity of the third carbon-based material is 350 mAh/g - 363 mAh/g, optionally 352 mAh/g - 362 mAh/g.

26. A power consuming device, comprising a secondary battery according to any one of claims 1-25.
